# EUROPEAN PATENT SPECIFICATION

(11) **EP 2 517 975 B1**
(45) Date of publication and mention of the grant of the patent: **11.12.2013**
(21) Application number: 12177796.5
(22) Date of filing: 04.06.2009
(51) Int. Cl.: B65D 71/50, B65D 71/08, B65B 21/24, B65B 27/04, B65B 53/06, B65D 75/34, B29C 63/42, B65B 17/02

(54) **Heat-shrinkable holder and package comprising a plurality of articles secured by such a holder**
Wärmeschrumpfbarer Halter für Artikel und Verpackung von durch einen solchen Halter zusammengehaltenen Artikeln
Manchon thermorétractable pour articles et emballage d'articles solidarisés par un tel manchon

(30) Priority: 04.06.2008 US 133153
(43) Date of publication of application: 31.10.2012
(62) Divisional of application: 09759407.1
(73) Proprietor: ILLINOIS TOOL WORKS INC., Glenview Illinois 60026-1215 (US)
(72) Inventor: Hartness, Thomas P, Greenville, SC South Carolina 29615 (US); Davidson, Mark W, Greer, SC South Carolina 29651 (US); Loughlin, John, Charlotte, NC North Carolina 28209 (US)
(74) Representative: Cundy, Jack William

(56) References cited:
- WO-A-2008/052211
- US-A- 3 759 378
- US-A- 5 901 847
- US-B1- 7 048 817

## Description

### TECHNICAL FIELD

The present invention relates generally to a heat-shrinkable holder for securing articles, a package securing such articles using heat-shrinkable sheets, and methods and apparatus for making such holders and packaging such articles using heat-shrinkable sheets.

### BACKGROUND

Articles such as beverage containers are often secured together using thermoplastic ring-type carriers. Some such carriers are sometimes known as "six-pack" carriers, although carriers for holding various numbers of containers have been used. Typically, such carriers comprise a flexible plastic, for example made from a low-density polyethylene. The carriers have openings formed smaller than the containers. The carriers are stretched over a suitably positioned group of the containers. When released, the openings conform to the sides of the containers, thereby unitizing the containers into a package.

The characteristics of the plastics used in such stretch-loaded carriers are such that it can be difficult to remove individual containers or groups of containers together due to the amount of force required. In particular, the complexity of manufacture and use of such carriers increases substantially with
the number of containers being held by the carrier. Also, the carriers used are generally small strips, located around the top portion of the containers, for example along a ridge at the top of a can. The plastics are thus not susceptible
to carrying printed indicia, and are typically not sufficiently transparent or translucent so as to allow the view of any indicia on the containers being held.
Also, a fair amount of force and complicated machinery is required to stretch the carriers so as to place them over the containers. Therefore, although stretch-loaded carriers have been used for many years, various drawbacks do exist with regard to stretch-loaded carriers.

In conventional shrink-wrapping, a load is fed to a wrapping zone in which a shrink-wrap film is placed on the load in some fashion. The film is cut into pieces or sheets before or during the placement on the load. Typically, the film makes a complete revolution around the load so that two cut ends overlap. The load and film are then passed into a heating tunnel causing the film to shrink and compress against the load. Typically, the film is cut into sheets large enough to allow for some overlap between edges when placed on the load. During the heating process, the edges may therefore be sealed together forming a unitary package.

Groups of articles such as containers have been wrapped with shrink-wrap in such fashion previously. However, due to the nature of conventional shrink-wrapping, the film extends only around the outside of the articles. Therefore, individual articles may not be removed without compromising the integrity of the entire package, and individual articles may contact each other while packaged, possibly leading to damage. To address issues such as these, sometimes, articles are even placed in a first container such as a box or a stretch wrap carrier, and then shrink-wrapped. Such packaging adds cost and wastes material.

WO 2008/052211 discloses a heat-shrinkable holder of the type set forth in the preamble of the accompanying claim 1.

US 5,901,847 discloses strips bundling articles individually in sleeves which are separable by means of perforated lines.

US 7,048,817 discloses contacting walls of containers for groups of articles with releasable fastener portions (adhesive), which enable a user to easily subdivide a composite carton into two individual cartons while maintaining the integrity of those individual containers.

Accordingly, an improved holder for articles such as containers, an improved package of unitized containers, and improved methods and devices of packaging would be welcome, addressing one or more of the above drawbacks of conventional packaging technology, and/or other disadvantages of currently available technology.

### SUMMARY

According to the invention, there is provided a heat-shrinkable holder of the type set forth in the accompanying claim 1. In addition, according to certain aspects of the disclosure, heat-shrinkable holders for securing articles, packages securing such articles using heat-shrinkable sheets, and methods and apparatus for making such holders and packaging such articles using heat-shrinkable sheets are discussed. Particular holders and packages are disclosed, wherein multiple film sheets are joined. Methods of manufacturing and applying such holders are also disclosed. Films may be printed upon, welded, folded and sliced if desired. Many options in structure, method and apparatus are provided, and the descriptions below should be considered examples and not limiting as to the true score of the many inventions disclosed herein.

### BRIEF DESCRIPTION OF THE DRAWINGS

The examples disclosed in Figs. 1 to 8 and 14 to 40 are included for reference only and do not comprise the claimed subject-matter.

FIG. 1 A is a perspective schematic view of one possible line configuration of a line for manufacturing heat-shrinkable holders according to certain aspects of the present disclosure.

FIG. 1B is a perspective schematic view of one possible line configuration of a line for placing articles in heat-shrinkable holders so as to create a package.

FIG. 2A is a perspective view of one example of an empty heat shrinkable holder.

FIG. 2B is a perspective view of the heat shrinkable holder as in FIG. 2A, with articles located within the openings of the holder, before heat-shrinking.

FIG. 2C is a perspective view of the holder and articles as in FIG. 2B, after heat-shrinking.

FIG. 3 is a top view of a heat-shrunken holder as in FIG. 2C, with the articles removed for clarity.

FIG. 4A is a perspective view of an alternate heat-shrunken holder and articles, as in FIG. 2C, wherein the holder includes perforations for assisting in removing individual articles.

FIG. 4B is a perspective view of an alternate heat-shrunken holder and articles, as in FIG. 2C, wherein the holder has a smaller vertical dimension.

FIG. 4C is a perspective view of an alternate heat-shrunken holder and articles, as in FIG. 2C, wherein the articles are held by two holders as in FIG. 4B.

FIG. 4D is a perspective view of an alternate heat-shrunken holder and articles, as in FIG. 2C, wherein the holder is smaller and centrally located vertically along the articles.

FIG. 4E is a perspective view of an alternate heat-shrunken holder and articles, as in FIG. 2C, wherein the holder includes printed indicia thereon.

FIG. 4F is a perspective view of an alternate heat-shrunken holder and articles, as in FIG. 2C, wherein printed indicia on the articles may be seen through at least a portion of the holder, and including an optional handle.

FIG. 4G is a perspective view of an alternate heat-shrunken holder and articles, as in FIG. 2C, wherein the holder extends along the entire side surfaces and at least partially onto the top and bottom surfaces of the articles.

FIG. 5A is a perspective view of an alternate heat-shrunken holder and articles, as in FIG. 2C, wherein the holder holds more articles in a two by six arrangement.

FIG. 5B is a perspective view of an alternate heat-shrunken holder and articles, as in FIG. 2C, wherein the holder holds more articles in a three by four arrangement.

FIG. 6A is a perspective view of an alternate empty heat-shrinkable holder.

FIG. 6B is a perspective view of the heat shrinkable holder as in FIG. 6A, with articles located within the openings of the holder, before heat-shrinking.

FIG. 6C is a perspective view of the holder and articles as in FIG. 6B, after heat-shrinking.

FIG. 7 is a top view of a heat-shrunken holder as in FIG. 6C, with the articles removed for clarity.

FIG. 8A is a perspective view of an alternate heat-shrunken holder and articles, wherein the holder includes an optional handle.

FIG. 8B is a perspective view of an alternate heat-shrunken holder and articles, wherein the holder includes an alternate optional handle.

FIG. 9A is a perspective view of an empty heat-shrinkable holder according to the invention.

FIG. 9B is a perspective view of the heat shrinkable holder as in FIG. 9A, with articles located within the openings of the holder, before heat-shrinking.

FIG. 9C is a perspective view of the holder and articles as in FIG. 9B, after heat-shrinking.

FIG. 10 is a top view of a heat-shrunken holder as in FIG. 9C, with the articles removed for clarity.

FIG. 11 is a top view of a heat-shrunken holder as in FIG. 10, with one perforation area torn.

FIG. 12 is a top view of a heat-shrunken holder as in FIG. 1 1, with one releasable fastener separated to free one article from the holder and package.

FIG. 13 is a top view of a heat-shrunken holder as in FIG. 12, with a second perforation area torn to free a second article from the holder and package.

FIG. 14 is a side view of an assembly for applying blanks to articles.

FIG. 15 is a top view of a portion of the assembly of FIG. 14, taken along line 15-15.

FIG. 16 is a side view of a portion of the assembly of FIG. 14, taken along line 16-16 in FIG. 15.

FIG. 17 is a sectional view of a portion of the assembly of FIG. 14, taken along line 17-17.

FIG. 18 is a top view of a portion of the assembly of FIG. 14, taken along line 18-18.

FIG. 19 is a perspective view of a portion of the assembly of FIG. 14 showing entry of the spreaders into the holder blank.

FIG. 20 is a perspective view of a portion of the spreader and air manifold section of the device of FIG. 14.

FIG. 21 is a perspective view of an alternate empty heat shrinkable holder.

FIG. 22 is a perspective view of the heat shrinkable holder as in FIG. 21 , with articles located within the openings of the holder, before heat-shrinking.

FIG. 23 is a perspective of the package including the holder and articles as in FIG. 22, after heat-shrinking.

FIG. 24 is a top view of the holder and articles as in FIG. 22, before heat-shrinking.

FIG. 25 is a top view of the holder and articles as in FIG. 24, after some heat-shrinking.

FIG. 26 is a top view of the package including the holder and articles as in FIG. 25, after heat-shrinking.

FIG. 27 is a diagrammatic view of one process and structure for making the holder of FIG. 21.

FIG. 28 is a diagrammatic view of one way and structure for carrying out a portion of the process of FIG. 27.

FIG. 29 is a diagrammatic view of an alternate way and structure for carrying out a portion of the process of FIG. 27.

FIG. 30 is a perspective view of another alternate empty heat shrinkable holder related to the embodiment of FIG. 21.

FIG. 31 is a perspective schematic view of one possible line configuration of a line for manufacturing heat-shrinkable holders according to certain aspects of the present disclosure, such as the holder of FIG. 21.

FIG. 32 is an enlarged perspective schematic view of portion A of FIG. 31 showing an initial point in manufacturing holder as in FIG. 31.

FIG. 33-37 are perspective schematic views as in FIG. 32 showing possible successor steps in one process for manufacturing a holder as in FIG. 21.

FIG. 38 is a perspective view of another embodiment of an empty holder.

FIG. 39 is a top schematic view of a package including articles and the holder of FIG. 38, after heat-shrinking.

FIG. 40 is a perspective schematic view of one possible line configuration of a line for manufacturing heat-shrinkable holders according to certain aspects of the present disclosure, such as the holder of FIG. 38.

### DETAILED DESCRIPTION OF THE PREFERRED EMBODIMENTS

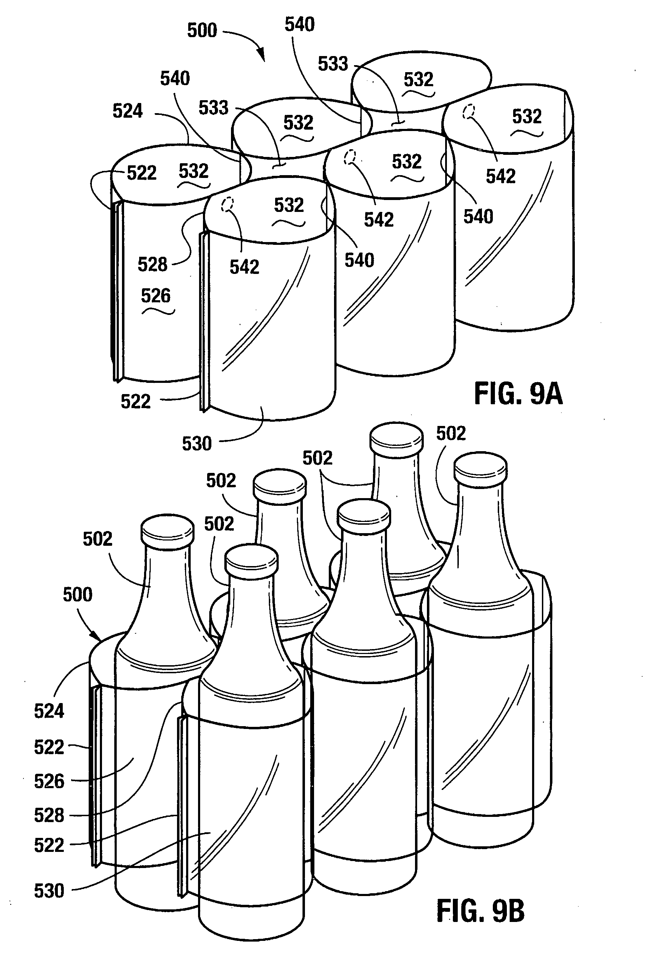

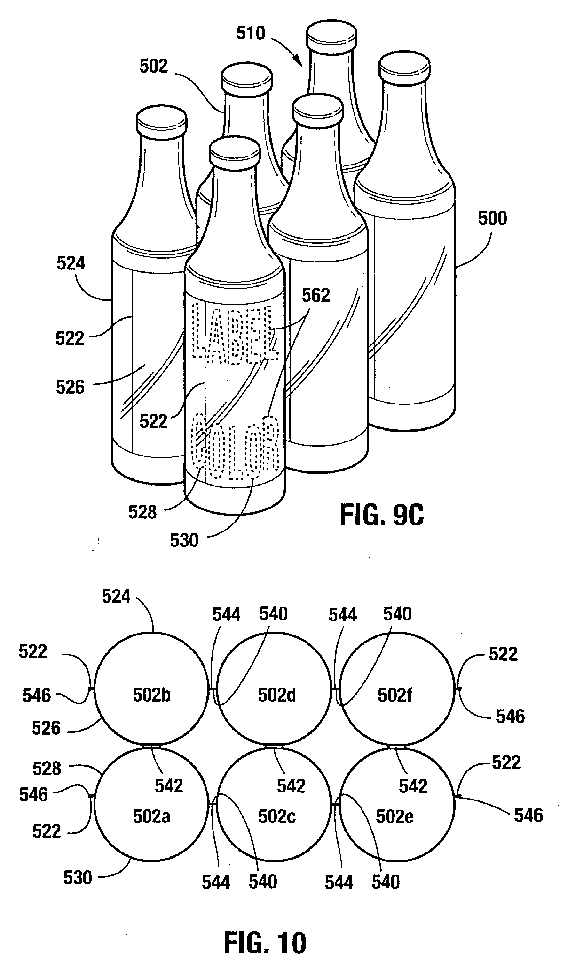

Reference will now be made in detail to examples illustrated in the drawings. The embodiment shown in figures 9 to 13 is provided by way of explanation of the invention, and not meant as a limitation of the invention. In discussing various examples, like or similar reference numerals are used below with like or similar parts of various example.

As described herein, a shrink-wrapping material may be used to form holder for articles. Preferably, the holder is formed from at least two sheets of the heat shrinkable material for holding at least one row of articles. However, more sheets and various configurations could be employed. For example, three sheets could be used for two rows of articles, as in a conventional six-pack (two by three) arrangement. If desired the sheets may have different properties, and all sheets need not be heat-shrinkable. For example, one of two sheets may be heat shrinkable, or two of three sheets may be heat shrinkable, as discussed below. The non-shrinkable sheets may be provided for structural stability (for example, use as a center sheet or a handle), for carrying printed indicia, or for other purposes. The present disclosure also includes various packages for holding articles, and methods for creating such holders and packages.

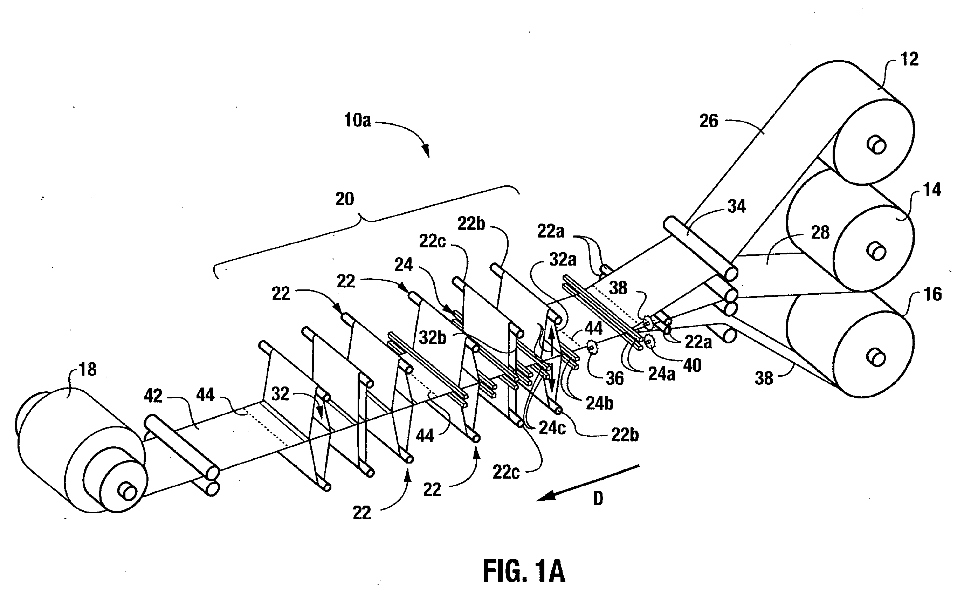

FIGS. 1A through 3 disclose one possible method for manufacturing such holders and creating such packages. The example used therein is for a conventional six-pack of cans. It should be understood also that the present invention has utility with various articles, not just containers, and with various containers, not just cans, as shown.

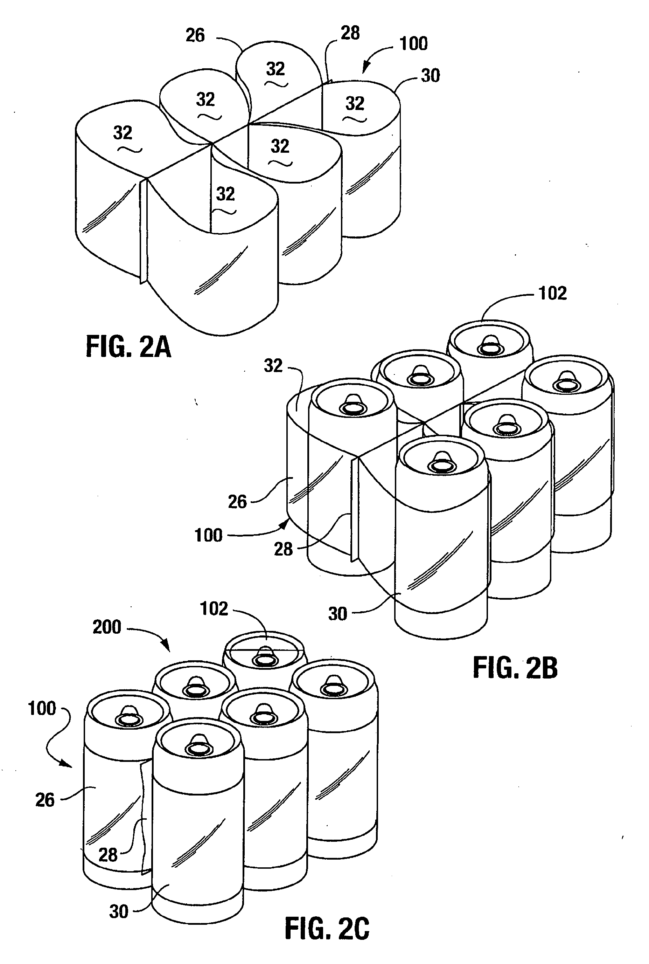

More particularly, FIG. 1A is a perspective schematic view of one possible line configuration of a line for manufacturing heat-shrinkable holders, an example of which is shown in FIG. 2A. As shown in FIG.1A, line 10a includes film supply rolls 12, 14, 16 at one end and take up roll 18 at the other. Between the rolls lies a forming zone 20, where film from rolls 12, 14, 16 is formed into holders for articles.

Forming zone 20 includes spreaders 22 and sealers 24. As shown in FIG. 1A, spreaders 22 are rods inserted between films 26, 28, 30 to create openings 32. At the rightmost end of forming zone 20, spreaders 22a are being inserted between the films 26, 28, 30, closely adjacent to film 28. Spreaders 22 generally travel along direction D with the films once inserted. By the time spreaders 22a move along direction D and reach the position of spreaders 22b, spreaders 22a will have moved outward from film 28 in the directions of arrows O. Simultaneously sealers 24 are sealing films 26 and 30 to film 28. As illustrated, sealers 24 are heat-sealing devices, although other devices could be used to seal the films together, such as adhesive applying devices. Sealers 24a hold and seal the films 26, 28, 30 together thereby forming joinder portions while spreader 22a moves to the position of spreader 22b. Then, another sealer 24 (not shown) will contact films 26, 28, 30 and seal them together to create another opening (not shown) upstream from opening 32a.

As shown, each opening 32 is formed by one spreader 22 and two sealers 24. It is also possible to form adjacent openings utilizing common sealers 24 between them. Therefore, only one sealer set 24 could be provided above and below the films between openings 32a and 32b, for example. Such sealer set could make a single point contact, thereby changing the shapes of the openings a bit to widen them, or could extend along direction D between openings 32a and 32b and seal the entire area between sealers 24b and 24c. All openings 32 need not be the same size. For example, the outermost openings may be larger than the center opening in a common six pack arrangement (not different sizes of openings being formed in FIG. 1A). Thus, the loops of film 26 may have different sizes along a given holder. Making the central loops smaller may help pull the resulting package together more tightly during heat-shrinking.

Spreaders 22 and sealers 24 should remain in contact with films 26, 28, 20 long enough to reliably seal them together to form a blank 42. The amount of contact time may vary according to line speed, sealer type (heat versus adhesive), sealer temperature, film properties, etc. FIG. 1A shows only one of the possible arrangements of spreader 22 and sealer 24 contact ranges.

Spreaders 22 and sealers 24 may be moved laterally, vertically, pivotally, or some combination, into and out of place, by suitable motors, drives, etc. For example, the spreaders and sealers may be mounted on a rotating device that places the elements in the upstream position, drives them in direction D, removes them in the downstream position, and then returns them to the upstream position. A programmable logic controller, motors and sensors can be used to control such movement as desired. Various guide rollers 34, which may be driven or idlers, may be provided to guide the films thorough line 10a. The films may be paid off rolls 12, 14, 16 at different speeds to account for the different lengths of films used in forming zone 20. That is, more of films 26 and 30 is needed than of film 28, as configured in FIG. 1A. Some or all of the film supply rolls 12, 14, 16 may therefore be driven, and other flow controlling structures such as gimballing rollers or the like may be used.

Perforating devices 36, 38, and 40, schematically shown in FIG. 1A, may also be employed, if desired. As shown, perforating device 36 perforates all three films 26, 28, 30, so as to allow for division of the films into separate holders. Perforating device 38 perforates film 26, and perforating device 40 perforates film 30. These latter perforations allow individual articles to be removed from the formed holders later. Perforating devices 36, 38, 40 may be linearly or rotationally moving knife devices. Controllers and servomotors and the like may cause the perforating devices to operate at desired times, to achieve perforations where desired in the films.

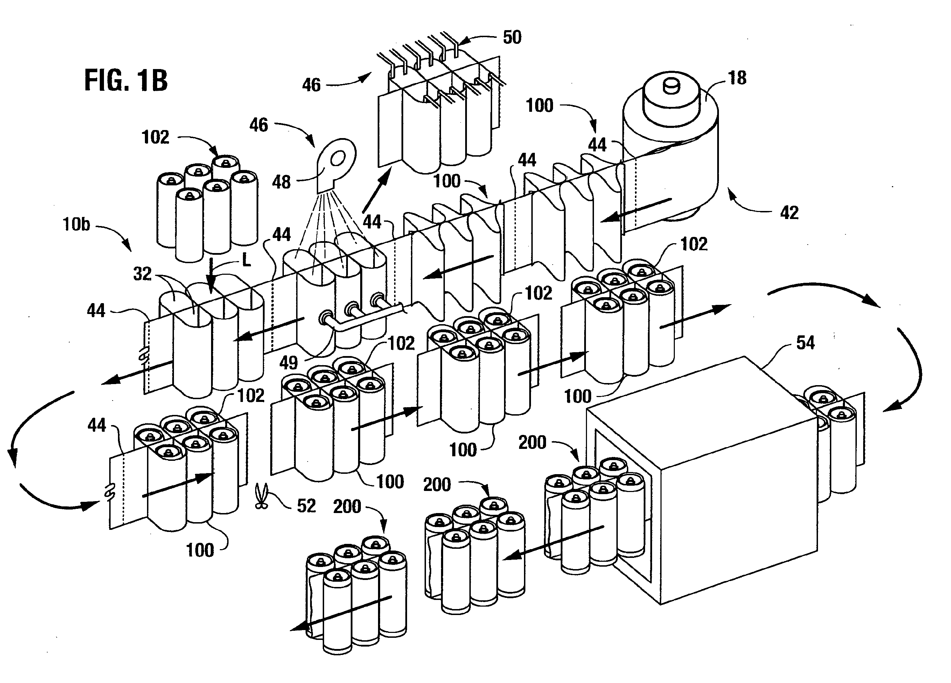

Take up roll 18 may be eliminated if desired, and line 10a of FIG. 1A may lead directly to line 10b of FIG. 1B. Alternatively, take up roll 18 may be replaced by a box or the like, with the film material being fan folded in place. Use of a box may provide easier splicing and change out opportunities, while use of a roll may provide more secure control and denser packaging. Either is an acceptable modification of that shown.

FIG 1B is a perspective schematic view of one possible line configuration of a line 10b for placing articles in heat-shrinkable holders so as to create a package. As stated, lines 10a and 10b may be merged into one line, eliminating the need for use of take up rolls 18, if desired. As shown, roll 18 supplies blank 42 material, comprising in FIG. 1B adjacent six-pack holders 100 separated by perforations 44 formed by device 36. Blank 42 travels to an opening station 46, where an opener such as a blower 48, a suction device 49, or a mechanical finger device 50, or some combination of both opens the openings 32 of holders 100. Articles 102 are then loaded into openings 32 (see arrow L). As shown, six cans are vertically moved into the openings 32. However, the articles may instead be vertically stationary and the blank material may be placed over the articles from above or below, if desired. Blank 42 is then separated at perforations 44 by a divider 52 to form individual loaded holders. It is possible to not make the perforations where illustrated in line 10a, and to simply cut the blank 42 when indicated in line 10b. The loaded holders 100 are then passed into a heating device 54 such as a heat tunnel. Any of the films within the holders 100 that are heat-shrinkable will then contract, forming unitary packages 200.

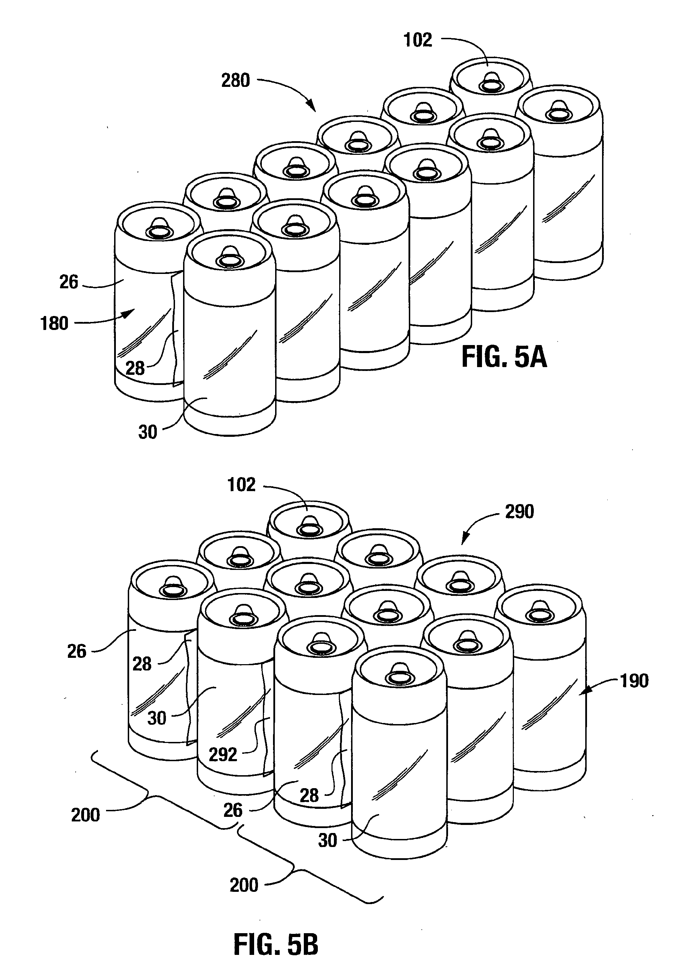

If desired, packages 200 may be further combined in various ways, such as by heat sealing or shrinking or adhesives to create still larger packages. For example, two six packs could be combined to create a twelve pack (see FIG. 5B); four six packs could be combined to create a case, etc. Also, packages 200 may be connected vertically.

It should be understood that the representations of FIGS. 1A and 1B are not intended to be to scale and are schematic illustrations only. It should also be understood that the line 10a need not use three films; any number of films greater than two may be employed with modification of the line. For example, two films could be used to create a linear collection of articles. Four or five films could be used to create a grouping of articles three across (as opposed to two across). Modifications to the heat sealing and possible use of adhesives, whether heat activated, heat cured, contact adhesives, or otherwise, could be used to create larger arrays of openings and larger packages.

FIGS. 2A-2C show enlarged views of a holder 100 and articles 102, in this case cans. FIG. 2A shows a holder 100, as separated along perforations 44. It would be possible to separate the holders 100 before filling them with articles 102, if desired. FIG. 2B shows six articles 102 in openings 32 of holder 100 before heat shrinking. FIG. 2C shows unitized package 200 after heat shrinking. FIGS. 2B and 2C illustrate that heat-shrinking can beneficially cause the articles 102 to be pulled together in two perpendicular dimensions, that is along the line of central film 28 and perpendicular to it. This shrinking helps ensure a solid unitized package 200. Adjacent articles 102 all have film between their sides to the will not "clank" into each other, possibly damaging the articles during handling or shipping. This is especially useful if the articles are containers, such as glass bottles. Also, the heat shrinking maintains the articles in a solid formation, as opposed to certain container holders where the bottoms of the containers may swing out from the tops when moved about. Again, the disclosed holder 100 prevents such swinging, and potentially prevents damage resulting therefrom. Articles are unlikely to slip out of holder 100 due to the tensions caused by heat shrinking, making them easy to handle and carry. Also, the resulting unitary package can be readily stacked and or used in displays. Because each article is packaged in its own heat-shrunken opening, individual containers are readily removed without damaging the integrity of the rest of the package.

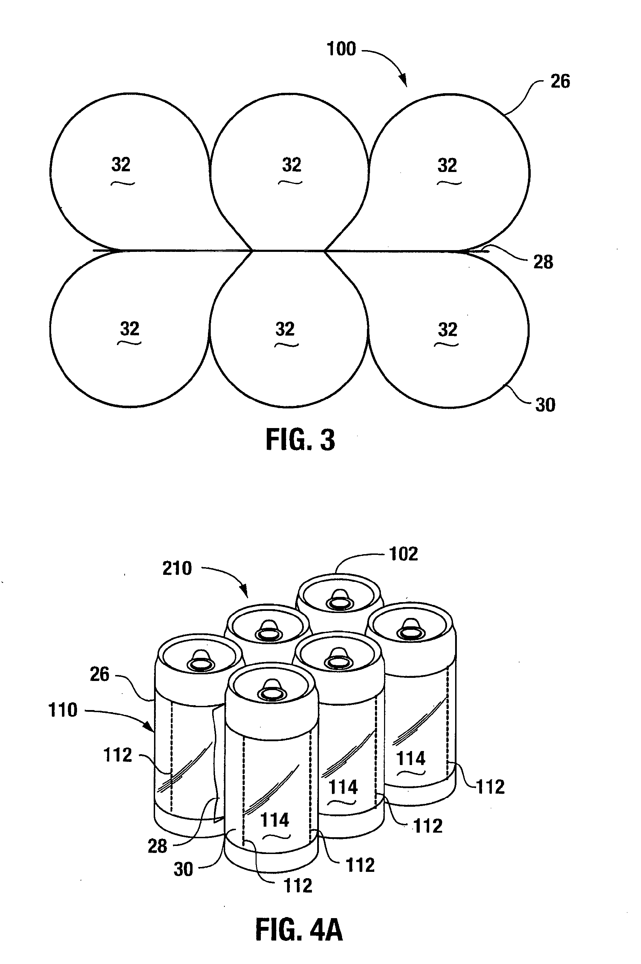

FIG. 3 is a top view of a heat-shrunken holder 100 as in FIG. 2C, with the articles removed for clarity. As seen, shrinking along the central line followed by film 28 helps draw the six containers in to form a unitized shape, with all adjacent containers having at least one buffering piece of film between them for protection. As can be seen, the amount of film used from films 26 and 30 is much greater than from central film 28, and the outermost openings 32 are larger than the central openings. Based on the size and shape of the articles to be packaged, the operation of forming zone 20 can be readily designed so as to achieve a desired resulting configuration. The amount of film used for outer films 26 and 30 may thus be two times more than that of film 28, and could be as much as four or more times greater as well, depending on the application.

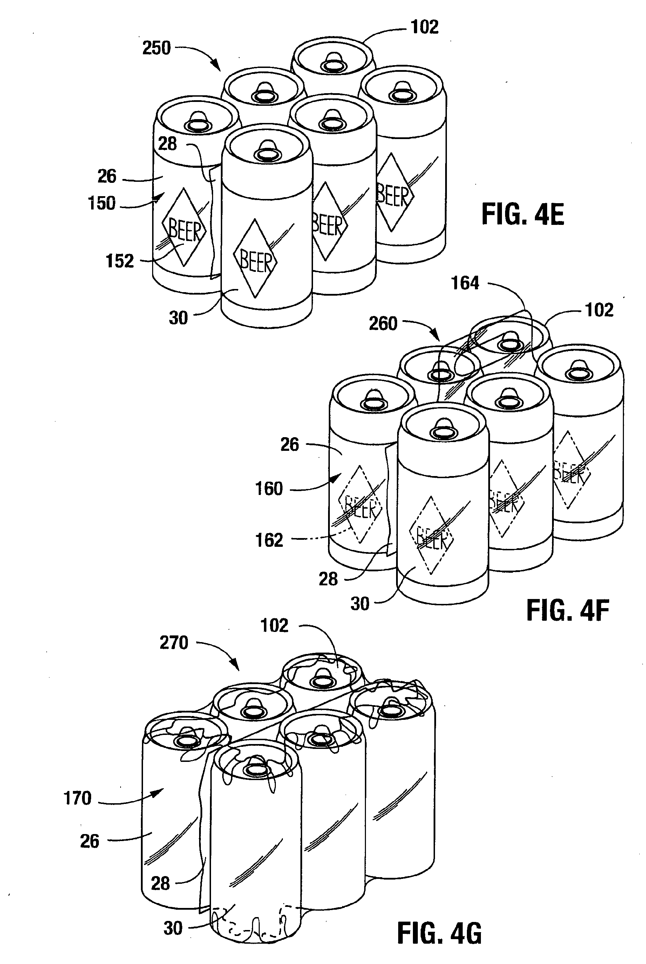

FIG. 4A is a perspective view of an alternate package 210 including heat-shrunken holder 110 and articles 102, as in FIG. 2C, wherein the holder includes additional perforations 112 for assisting in removing the individual articles. Perforations 112 are made by devices 38 and 40 in line 10a, as discussed above. As shown, two perforations 1 12 are provided for each article 102, but more or fewer may be provided. Also, the area of film 114 between the perforations may be bonded to the article 102, if desired, for example, by an adhesive that could be applied to the film or article, or activated during heat shrinking or otherwise. Thus, the holder 100 would provide a label for the article 102 via film piece 1 14, eliminating the necessity of separately labeling the article. (See FIG. 4E below for printed indicia on film).

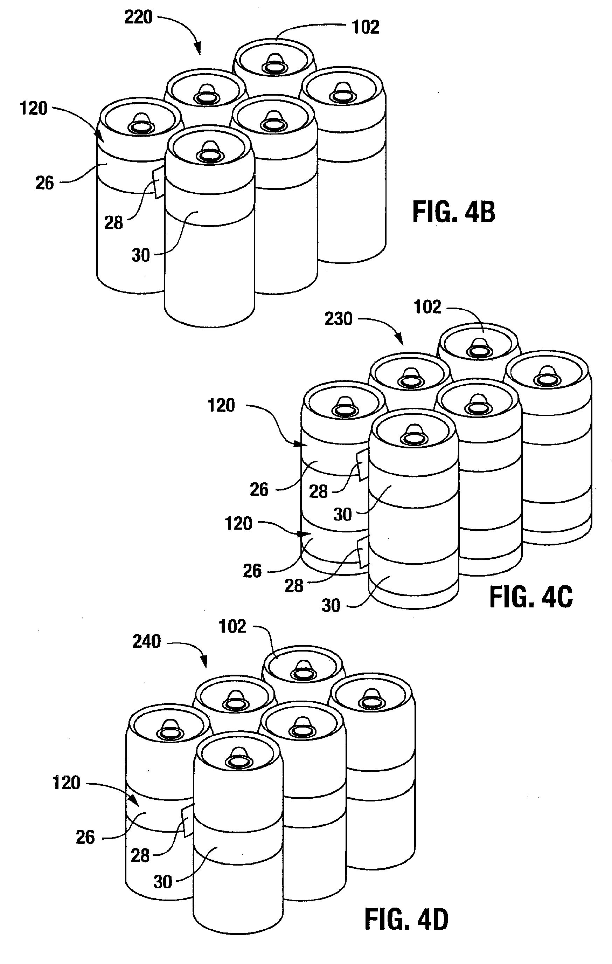

FIG. 4B is a perspective view of an alternate heat-shrunken package 220 including holder 120 and articles 102, as in FIG. 2C, wherein the holder has a smaller vertical dimension. If desired, holder 120 may thus cover less of the articles, but the protective abilities may be lessened at some point with a smaller holder. Also, the holder may be placed around a bottle neck or along a can ridge, if desired.

FIG. 4C is a perspective view of an alternate heat-shrunken package 230 including holder 120 and articles 102, as in FiG. 2C, wherein the articles are held by two holders 120 as in FIG. 4B. Use of two smaller holders 120 requires less film than holder 100 and addresses protection issues noted above, although assembly of the package 230 may be more complex.

FIG. 4D is a perspective view of another alternate package 240 including a heat-shrunken holder 120 and articles 102, as in FIG. 2C, wherein the holder is smaller and centrally located vertically along the articles. Central location of a smaller holder may also address protection issues while reducing material used.

FIG. 4E is a perspective view of an alternate package 250 including a heat-shrunken holder 150 and articles 102, as in FIG. 2C, wherein the holder 150 includes printed indicia 152 thereon. The printed indicia 152 may be individual elements or a common element across the various articles or across multiple packages, as desired. Thus all article labeling or supplemental article labeling may be accomplished via the package holder portion.

FIG. 4F is a perspective view of an alternate package 260 including a heat-shrunken holder 160 and articles 102, as in FIG. 2C, wherein printed indicia 162 on the articles 102 may be seen through at least a portion of the holder, and including an optional handle 164. In this example, the outer films 26 and 30 would be at least partially translucent or transparent in whole or part. If such a handle 164 were provided, it could be part of a film, such as central film 28 as shown, or an entirely separate piece attached in some way, such as via heat or adhesive. Handle 164 could need to be made of a more robust and/or less or non-shrinkable film or other material, depending on the size and weight of the package.

FIG 4G is a perspective view of an alternate package 270 including heat-shrunken holder 170 and articles 102, as in FIG 2C, wherein the holder extends along the entire side surfaces and at least partially onto the top and bottom surfaces of the articles Thus, as shown, the articles 102 are substantially wrapped and secured in three dimensions using holder 170

FIG 5A is a perspective view of an alternate package 280 including a heat-shrunken holder 180 and articles102, wherein the holder holds articles in a two by six arrangement Thus, it should be understood that various arrangements of articles is possible For example, as further shown in FIG 5B alternate package 290 includes a heat-shrunken holder 190 and articles 102, wherein the holder holds articles in a three by four, twelve-pack arrangement Such arrangement can be achieved in various ways, and in various steps as mentioned above As shown herein, the package 290 is essentially equivalent to two side-by-side six pack packages 200, with an added film layer 292 therebetween Layer 292 could be applied via heat and/or adhesive Alternatively, the entire twelve article holder 190 could be constructed in one pass on a modified version of line 10a

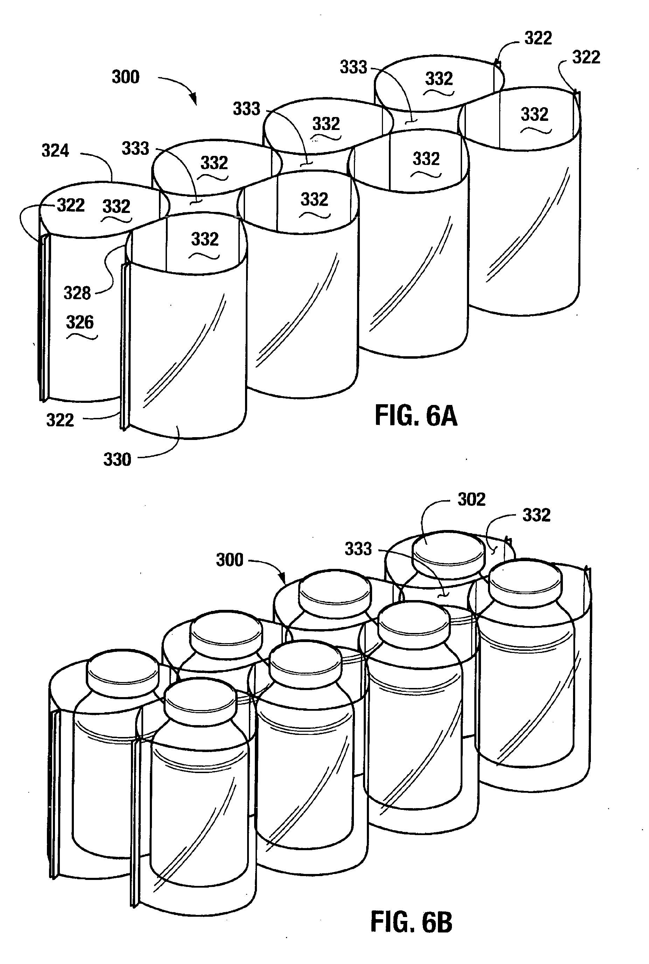

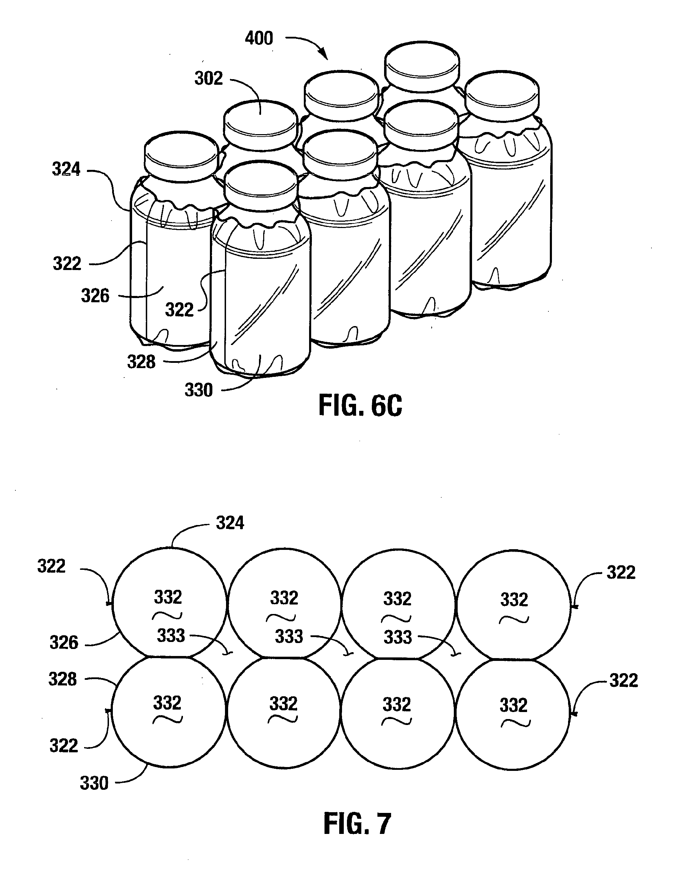

FIGS 6A-6C show enlarged views of an alternate holder 300 and articles 302, in this case bottles Holder 300 is made from four sheets of film, 324, 326, 328, 330 Holder 300 may be formed from a blank holding a plurality of such holders, separable along perforations, such as perforations 44 discussed above Separation of holders 300 results in two edges 322 at each end of the holder As shown, holder 300 has eight openings 332 for receiving the articles 302, although as discussed above, practically any number could be employed Other openings 333 are created by the manufacturing process, but these are not necessarily sized to accept articles 302, or at least articles of the same size FIG 6B shows eight articles 302 in openings 332 of holder 300 before heat shrinking FIG 6C shows unitized package 400 after heat shrinking As with FIGS 2B and 2C above, heat-shrinking can cause the articles 302 to be pulled together in two perpendicular dimensions, helping ensure a solid unitized package 400 Adjacent articles 302 all have film between their sides, as above, and each article is again packaged in its own heat-shrunken opening so that individual containers are readily removed without damaging the integrity of the rest of the package

Holder 300 beneficially includes sheets of substantially equal length between edges 322. Such equal sheet length allows holder 300 or a blank of multiple holders to lie flat or be readily rolled. In some applications, such abilities may be desirable, as compared to the holders described above.

It should be understood that although holder 300 is illustrated as having four sheets and eight openings, various different sizes are possible. For example, holder 300 could have two sheets holding a linear grouping of articles, or could have six or eight sheets, holding wider groupings.

FIG. 7 is a top view of a section through heat-shrunken holder 300, with the articles removed for clarity. As seen, shrinking helps draw the eight containers in to form a unitized shape, with all adjacent containers having at least one buffering piece of film between them for protection. Since the amount of film used from films 324-330 is somewhat equal, the resulting package is somewhat symmetrical.

Based on the size and shape of the articles to be packaged, the operation of forming zone as shown in FIG. 1A and the filling zone in FIG. 1B can be readily modified to form holder 300. For example, an even number of film supply rolls could be used, and the spreaders and sealers could be arranged as needed to form the desired configuration. It would be possible to first join two films to form an initial blank having one row of openings for articles, and then to join two or more of those blanks so as to create a package having more than one row. It would also be possible to join the films using a heat sealer while joining the blanks using an adhesive, or vice versa. The ultimate processes and machinery will depend on the desired package shape.

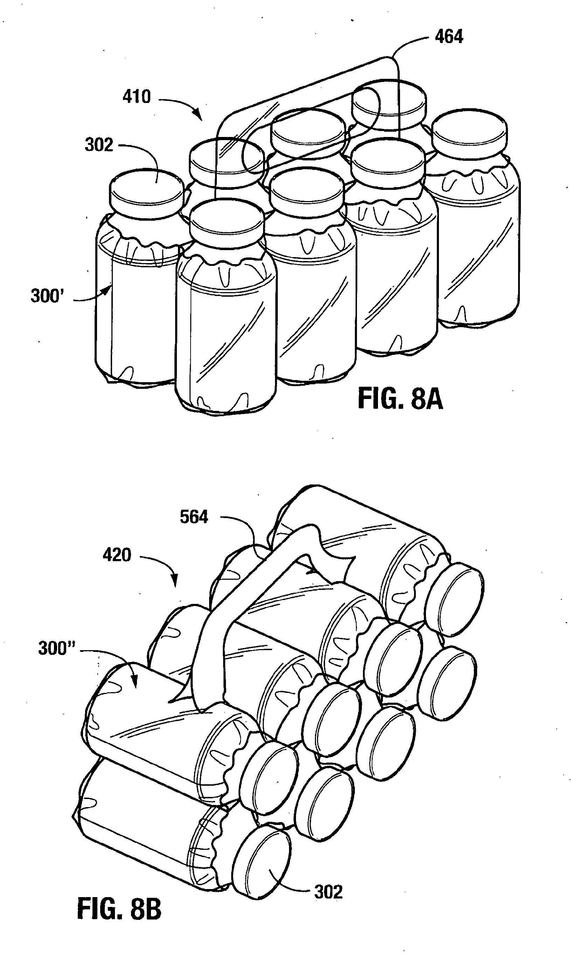

FIGS. 8A and 8B show two modifications to package 400 including handles. In FIG. 8A, package 410 includes a handle 464, similar to that shown above. Handle 464 may extend from one of the sheets forming holder 300' or may be an added sheet. In FIG. 8B, handle 564 of package 420 is attached to an outer sheet of holder 300". Handle 564 may be attached at any location via heat sealing or adhesive. Either handle may be made of shrinkable or nonshrinkable plastic or other materials, as desired. Handle 564 may also extend further around package for a more secure hold, if desired.

Various types of films may be used for the holders' films and handles, such as commercially available heat-shrink films, such as polyethylene (LLDPE, LDPE, HDPE), PVC, polypropylene, styrene copolymer, or the like. The ultimate material selected and its properties can be selected to achieve the needs of the size, shape, weight, and number of the articles being packaged, the method of shipment, sale and use, etc.

FIGS. 9-13 show an embodiment of a holder and package according to the claimed invention, in which the holder and label are dual-functioning. In fact, the holder and package are constructed so that upon removal of individual articles (such as containers) from the package, a commensurate portion of the holder is removed as well, comprising the label for the article, and leaving no "scrap" material behind. Therefore, waste and potential litter can be reduced, and recycling or other disposal can be improved.

More particularly, package 510 includes articles 502 held in place by holder 500. As illustrated, holder 500 holds six articles (in this case bottles) 502 in a six-pack orientation (two-by-three). Again, any number and arrangement of articles could be employed.

Holder 500 includes four films, 524, 526, 528, 530 arranged to hold the two rows of articles 502. If desired, holder 500 may be formed with heat seal portions 540 between articles in one direction, and a releasable fastener such as adhesive, glue, or other releasable fastener 542 in the other direction. In other words, strips of two films (524 and 526, or 528 and 530) could be formed by heat sealing 540 to form a row of openings 532 between adjacent heat sealing portions. Then, at least two of the two-film strips could be joined to form a holder 500 having multiple rows, as shown, thereby forming intermediate openings 533. Furthermore, perforations 544 may be formed at the heat seal portions 540 to provide separability of articles 502 from holder 500, and end perforations 546 may be formed to provide separability between two-film strips used to from holder 500. In the figures, the size of tails 522 and seal portions 540 are exaggerated for illustrative purposes. Tails 522 may also be sealed with the two films together in "one piece," rather than the two as shown. Such tails and seal portions need only be large enough to provide a seal and allow perforations to be created through them for separability. Reducing the size of these portions beneficially reduces the amount of raw material film used, reduces package weight, and may improve aesthetics by providing a smoother surface upon separation of articles, as described below.

Holder 500 could be formed using the structures and concepts disclosed in connection with FIGS. 1 A and 1 B, modified as needed for the particular application and holder size and shape. The releasable fastener 542 should hold the first blank strip (524,566) to the second blank strip (528,530), but should be releasable when a user pulls on it so as to allow separation between the adjacent two-film strips without tearing the strips adjacent the releasable fastener 542.

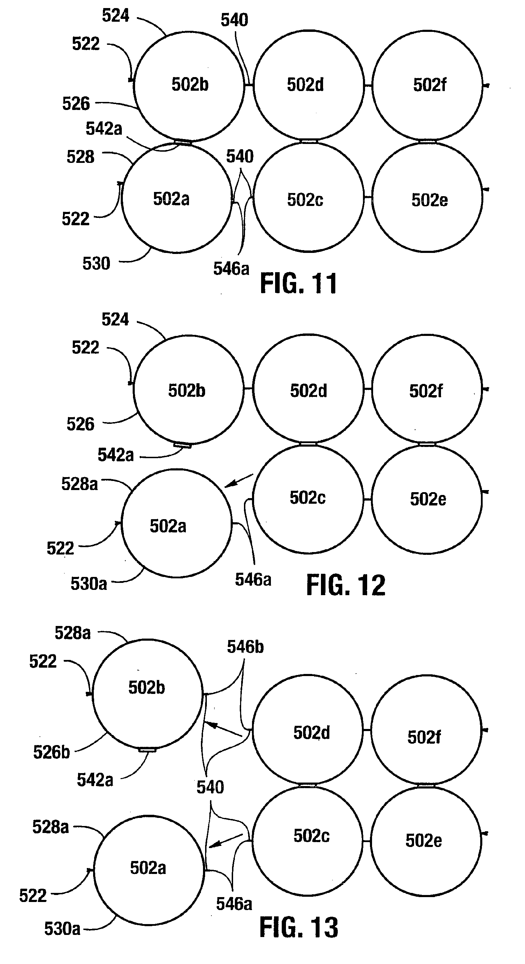

Thus, as shown in FIGS. 1 1 and 12, to remove a single article 502a from an end of the package 510, one would pull on it until tearing occurred along one set of perforations 546a and separation occurred along one releasable fastener portion 542a. Either separation could occur first or it could occur simultaneously. Doing so would leave material from films 528 and 530 firmly attached to article around the entire circumference. As shown in FIG. 13, another article 502b can be removed by tearing further perforations 546b. Sequentially all articles could be removed from package 510. Notably, upon removal of an article, no waste is created or left hanging from either the article or holder 500.

If desired, printed indicia of any type 562 may be provided on some or all of film portions 528a and 530a to provide a color background, labeling, decoration, etc. Thus, once separated from package 510, holder film portions 528a and 530a would comprise a label for the article 502a. The holder 502 thus can serve double duty as the label to meet decorational, promotional, or legal labeling requirements. The films forming holder 502 could thus be fed into a forming systems, such as that in FIG. 1A in synchronization, for example using known elements such as visual sensors, timing marks, etc. (not shown), to provide feedback to the film drive to thereby match the front and back side film portions to create a unified label appearance.

Alternatively, holder 502 could have transparent or translucent properties, either along the entire film or in portions, allowing an additional label or printed matter on the article to show through. The individual films on article 502a could if desired be constructed to be designed to be removed in some fashion, by additional perforations, or embedded tear strips, etc., after separation from package 510. Also, a reveal could be provided by way of an opaque or other colored portion of the films that would obscure something on an article beneath the films, so as to provide a potential surprise to a consumer, a game, a prize depending on what appears beneath, etc. Such reveal could also be carried out by printing on the inside of the films (facing the article, not the outside), if such material is not readable from the outside of package 510, regardless of whether something appears on the article beneath the film.

Also, if desired, it may be useful to have at least a portion of the film be non-transparent, so as to cover up any underlying barcode appearing on the article or underlying label, where the underlying barcode contains information related to an individual article (as opposed to a group such as a six-pack). Further, the film may have on its outside single a barcode related to the package of articles, or each packaged article may have on the respective film portion on its outside a barcode related to an individual article. In that way, inaccurate payment and inventory information is less likely to be obtained, whether inadvertent or intentionally, at checkout. Such options are available based on the desired application, channel of trade, retail environment, etc.

Presently, films deemed suitable for such holder 510 include polypropylene, PET, PVC, OPS, shrink materials, and various polyethylene blends. Depending on application, the film thickness may be about 40-76 micron. Welding may be carried out using known film welding devices such as heat bar or a ni-chrome wire shielded with Teflon cloth, or other suitable device. The releasable fastener may comprise a glue, an adhesive, etc. For example, the fastener may comprise a strip or individual portions of pressure sensitive adhesive such as hot melt or cold seal. One suitable adhesive for certain applications is The Bemis Company, Inc., Mactac STW199013. The fastener may also comprise a tape, or a sacrificial weld that has a strength designed to separate before tearing of the films at undesired locations. Perforations may be carried out using a triggered wheel, bar, knife, etc. The perforations between articles should be sufficient in length and percentage to allow separation at a desired location before failure at an undesired location when a consumer wishes to remove an article from a package. The perforations should not be so substantial that the integrity of the package is compromised during assembly of package, shrinking, handling, shipping, etc. The parameters of the films, size of the openings, extent of the perforations and choice and orientation of the releasable fastener will all be dependent upon the size, shape, weight, and material or the articles being packaged, the orientation of the articles, the number of articles in total and in terms of rows and columns in a given package, etc.

If a glue, adhesive, tape, heat seal or the like is used for releasable fastener 542, it can be selected so that the joinder point will release from one or both of the sheets upon pulling by the end user to allow an article to separate, leaving the sheets intact. Alternately, such joinder point can be selected so that it will not release without potentially tearing the sheets (that is, a firmer grip). If so, it may be desirable to weaken the area around the joinder point, for example with perforations or the like. In such case, adhesive or the like could be applied to areas within perforations on one or both sheets, allowing for removal of the perforated area of the sheet as an article is removed. Thus, the releasable fastener as claimed can have many variations within the scope of the invention.

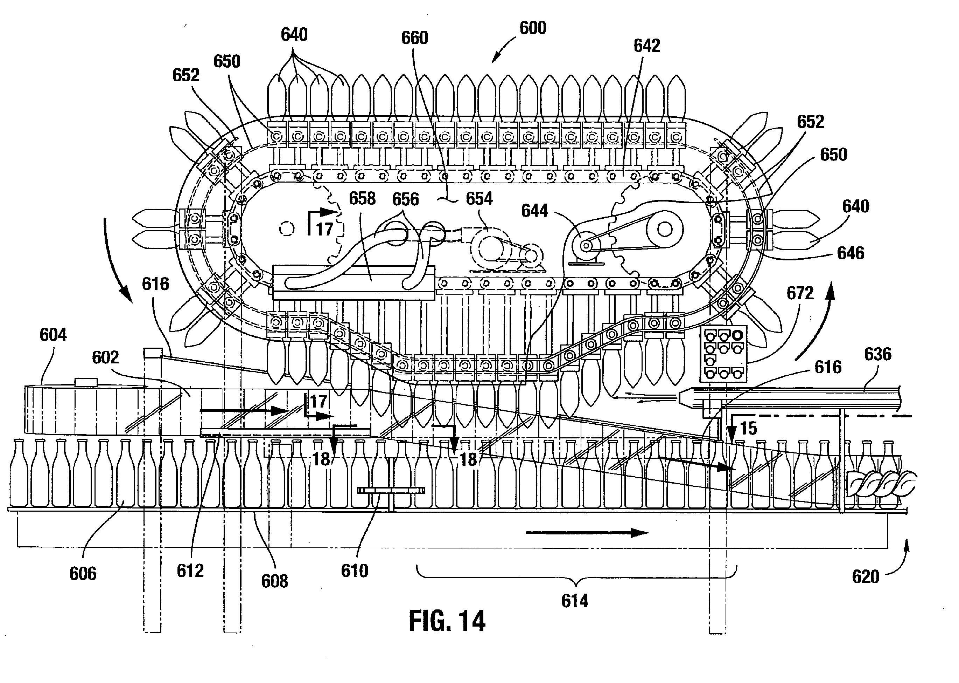

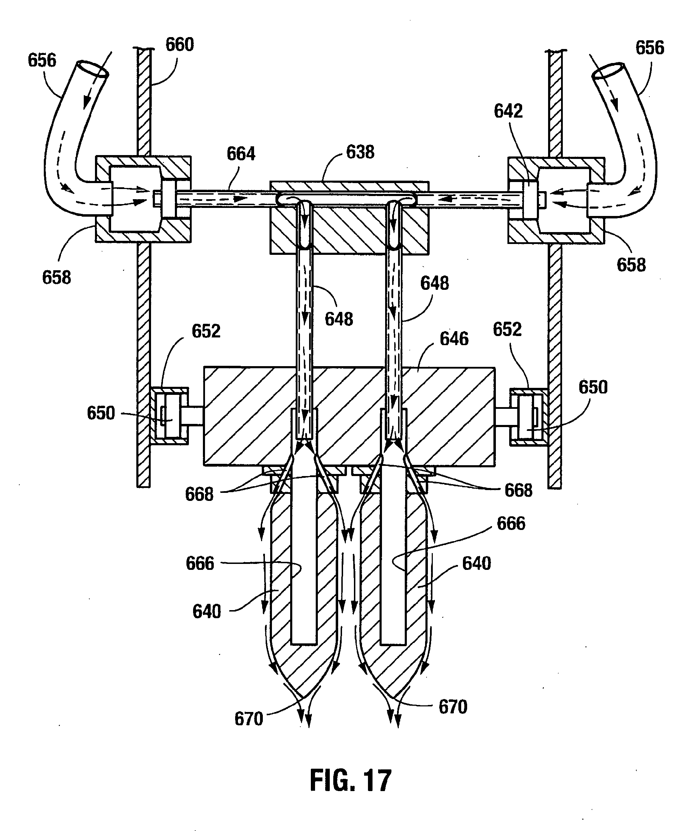

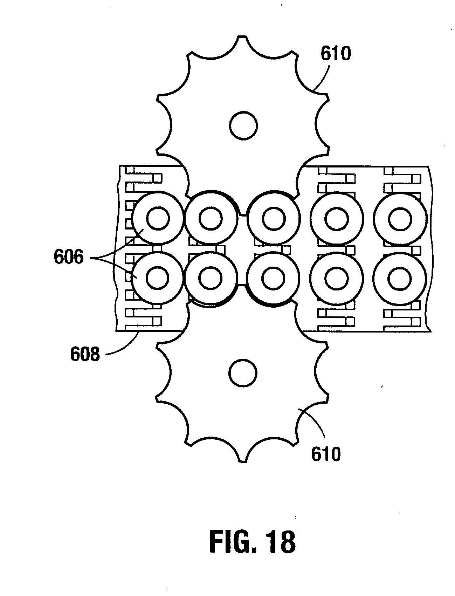

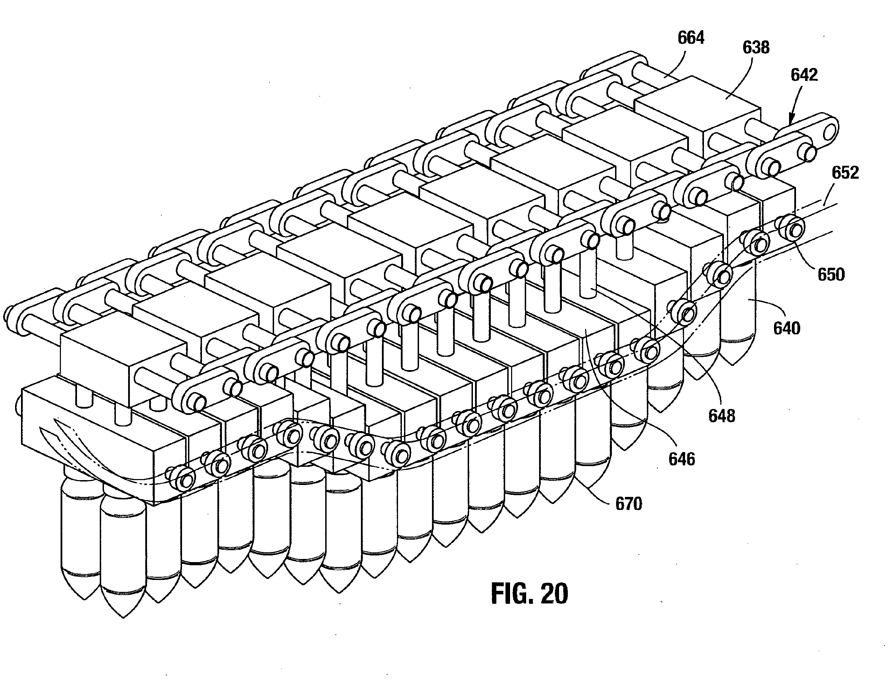

FIGS. 14-20 show one example of a device useful for applying films to articles such as bottles. As shown, device 600 applies film blank 602 from roll 604 on to articles 606 fed on a conveyor 608, in this case double-file. The process moves from left to right as shown in FIG. 14. Articles 606 move to the right until they meet a timing device 610, in this case star wheels (See FIG. 18). Other timing devices could be used, or the articles could be carried on a gripper conveyor with predetermined spacing already achieved.

Blank 602 follows guide 612 to a placement area 614, starting near the star wheels in FIG. 14. A further guide 616 helps urge blank 602 downward. Openings 618 in blank strip 602 are synchronized with the articles 606, either by use of sensors, timing marks, etc., or simply by virtue of hand attachment of the blank to leading articles when the device is started. As conveyor 608 is operated, articles 606 move to the right and pull blank strip 602, thereby unwinding it off roll 604. Guides 612 and 616 direct blank 602 downward to a desired position with articles 606 in each opening 618.

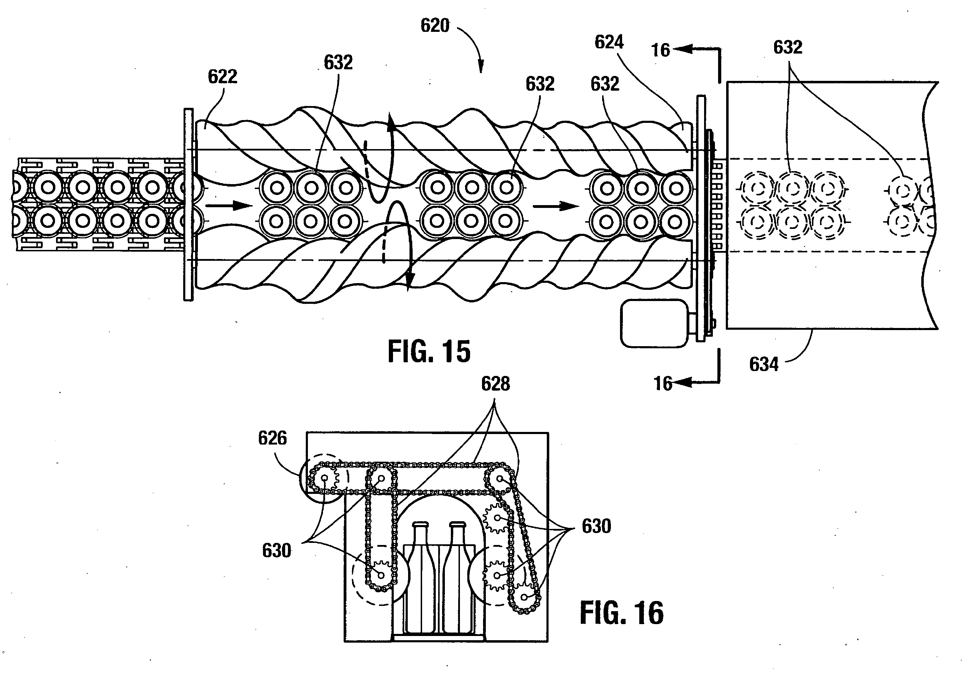

Separation devices 620, in this case screws, are located downstream from the placement area 614. As shown in FIG. 15, screws have non-uniform threading at a first end 622 to separate groups of articles according to perforations in films as the articles reach the second end 624. Separation devices 620 can be driven from a single drive input 626 via chains 628 and gearing 630. Separated groups of articles 632 are then fed into a heating unit 634, such as a heat tunnel, to shrink wrap the films and form the group of articles and film portion from blank 602 into a unitary package along the lines described above.

Additional devices may be employed to assist the placement of blank strip 602 over articles 606. For example, a blower 636 may be employed to blow along and downward against the blank within the placement area 614. Blower 636 can help slide the blank strips downward so that articles 606 end up in the desired openings 618 in the blank strips.

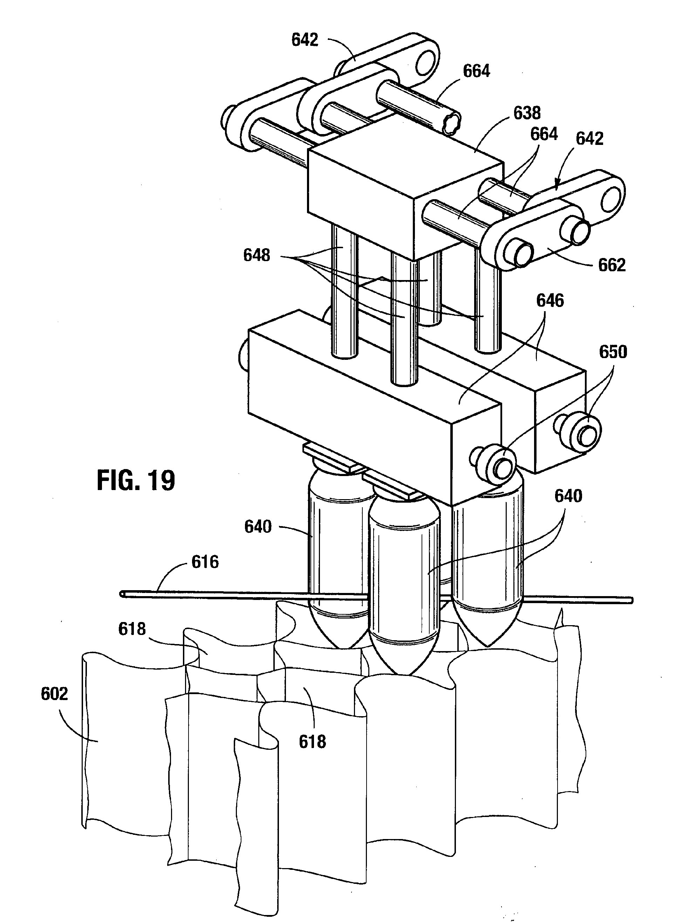

Also, separators 640 may be provided and driven in synchronicity with the articles 606 and blank strip 602. Each separator 640 fits in an opening 618 and functions to open and hold in place the opening so that the article will fit within it. Separators 640 are driven by a chain or chains 642 driven by a drive 644. Each separator 640 is mounted on a shuttle 646 that is slidably attached to a housing 638 attached to chain 642 via a support 648 (See FIG. 19). Shuttles 646 include wheels 650 that follow guide track 652. The guide track 652 may be contoured to drop separators 640 into openings 618 to provide a guide for the openings to slide on to articles 606. Supports 648 may extend into separators 640 when the separators are closer to chain 642.

If desired, a blower system may also be used with separators 640. As shown, blower 654 blows air via pipes 656 into manifolds 658 on the sides of housing 660. Links 662 of chain 642 are mounted on a hollow tube 664. When chain 642 is driven individual tubes 664 are pressurized when they reach manifolds 658. (Although manifolds are shown on both sides, it would be possible to use only one.) Tubes 664 are in fluid communication with respective supports 648, which are in fluid communication with an opening 666 within respective separators 640. Passages 668 through separators 640 allow the pressurized fluid to escape and travel downward along the outside of the separators. Such flow assists in the expanding of openings 618 within blank 602. As shown in FIG. 14, manifold 658 allows fluid to flow though such passages 668 before separators 640 are placed into openings 618, and such flow may continue for some time. If desired, such flow may continue until blank 602 begins to slide down onto articles 606.

Passages 668 should be large enough in size and number to provide sufficient flow to open openings 618 and/or assist sliding of blank 602 over articles 606. The shape of separator 640 assists in providing a smooth flow where desired, and the pointed tip 670 assists in aligning the separator with a desired opening 618. If desired, other shapes could be employed for separator 640, and alternate or additional passages cold be provided to allow fluid flow for a desired application, line speed, article, and/or blank. Device 600 and the respective conveyors, drives, blowers, etc. may be controlled by a controller 672, such as a PLC or the like as is available from Allen-Bradley or others.

If desired, the device above and blank could be modified slightly to provide separately sleeved articles during the manufacturing process. That is, blank 602 would be made of only two strips of film creating one row of openings 618 for articles 606. Device 600 would be modified also, for example by having only one row of separators 640. Separation devices 620 could be modified so that individual articles would be separated from each other, not separated into groups. Therefore, when the blank portion in the form of a heat-shrinkable sleeve enters heating unit 634, the sleeve is attached to the article, thereby potentially functioning as a label.

Using device 600 in such way to apply labels and/or sleeves to articles starting with film blanks has various benefits. First of all, if polyethylene is used, such film may be generally less expensive than other body sleevings in current use for articles such as containers. Also, a labeled container prepared in such way is achieved using a smaller factory footprint than in other arrangements, where for example, expensive adhesive applying and labeling machines might be required. Also, with minor change out of parts on device 600, a line could be put in place that could form either single article sleeves or multi-article packages.

It should be understood that other methods and devices could be employed to apply blanks to articles to assist in creating packages according to the above teachings. For example, suction, other blowers, fingers, or other mechanical means could be employed to spread and apply blank 602 to articles 606. And articles could be separated into group and made into packages in other ways. Further, such method need not occur with banks comprising two rows of openings or a six pack, etc., and practical number and/or orientation could be used.

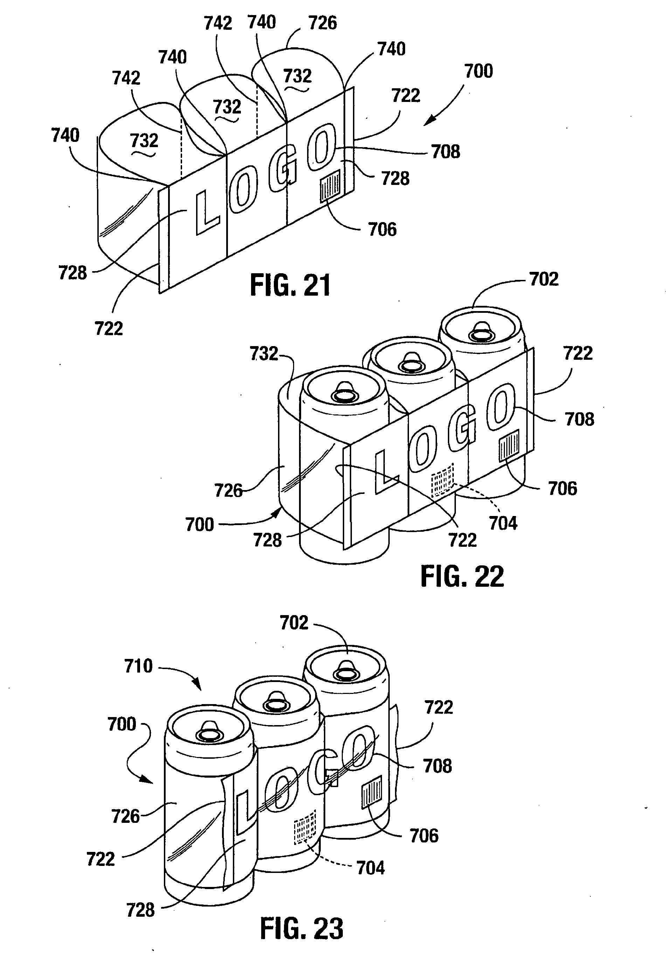

An alternate holder 702 is shown in FIGS. 21 -29, along with processes for manufacture and use of such holder. Holder 702 is made from two sheets of film 726, 728. As above, holder 702 may be formed from a blank comprising a plurality of such holders, which may be separable in some way to form individual holders as depicted or otherwise. Small tails 722 may be present if holders 702 have been separated from a long blank or other such structure. Tails 722 as depicted include a small piece of both films 726, 728. Tails 722 may be smaller than illustrated herein, shown in a possibly exaggerated size for demonstrative purposes only.

Sheet 728 of holder 702 has a shorter length as depicted in FIG. 21 than does sheet 726. As shown, sheet 726 is formed into three loops defining three openings 732. The loops are defined between sheet 726 and 728 by joinder points 740 along the sheets. As shown, four joinder points 740 are employed to create three openings 732, with the two center-most joinder points being employed for both adjacent openings. However, each opening 732 could be defined by two separate joinder points if desired, thereby modifying that shown to include six joinder points in holder 700. Also, joinder points 740 are also illustrated as having a minimal length in a direction along sheets 726 and 728. However, joinder points 740 could also have a longer dimension, providing further separation between adjacent openings 732 at the joinder points. If desired, perforations or sheet weakening structure may be provided at or between joinder points 740 to assist in separating holders or articles, as described below. Various modifications of such structure are thus possible within the scope of the present disclosure.

Joinder points 740 may be points where adhesive, heat or sonic welding, combinations of methods, etc. have been employed to join sheets 726 and 728 to form openings 732. If desired, secondary joinder points 742 may also be employed to join adjacent portions of sheet 726 together. Secondary joinder points 742 may be formed in various ways and shapes, either the same as or different than the first joinder points 740. Such secondary joinder 742 points may provide additional stability to holder during manufacture, during placement over articles 702, during shrinkage to form a package 700, during shipping or sale, or during handling by a consumer.

If desired one or both of films 726, 728 may include matter such as a UPC 706 or graphical indicia 708 such as writing, a logo, a photo, a drawing, etc. The graphical indicia may be configured to provide a unified impression across holder 700, or a separate impression for each article 702. Graphical indicia 708 may be on the inside, outside or both surfaces of holder 700, and maybe formed by inclusion of pigments, printing, etc. If desired, the films may be formed, treated or colored so as to be, either partially or fully along their lengths, not completely transparent. Therefore, any graphical information on the articles may be partially or fully obscured by the portions of or all of the films, if desired. Alternatively, the films may be completely transparent along their lengths so the outer surfaces of the articles are clearly visible through the films.

FIGS. 22-23 show placement of three articles 702 (in this case cans) in the three openings 732 in holder 700 prior to shrinkage. Such placement may be performed before or after holder 700 is separated from adjacent holders in a blank, if employed. As shown, openings 732 are slightly larger than the outer circumference of articles 702. Therefore, holder 700 may be slid onto articles 702 using structures and methods as described above or others. When holder 702 is placed, first and second joinder portions 740, 742 are generally located between adjacent articles 702, although variation in size, shape and location would be possible if desired. Further, articles 702 have been shown as identical and aligned linearly, but such is not required. If non-identical or alternative arrangements were employed, then the shape of holder 700 could be modified accordingly. It should therefore be understood that openings 732 need not be symmetrical and may have widely different shapes than shown.

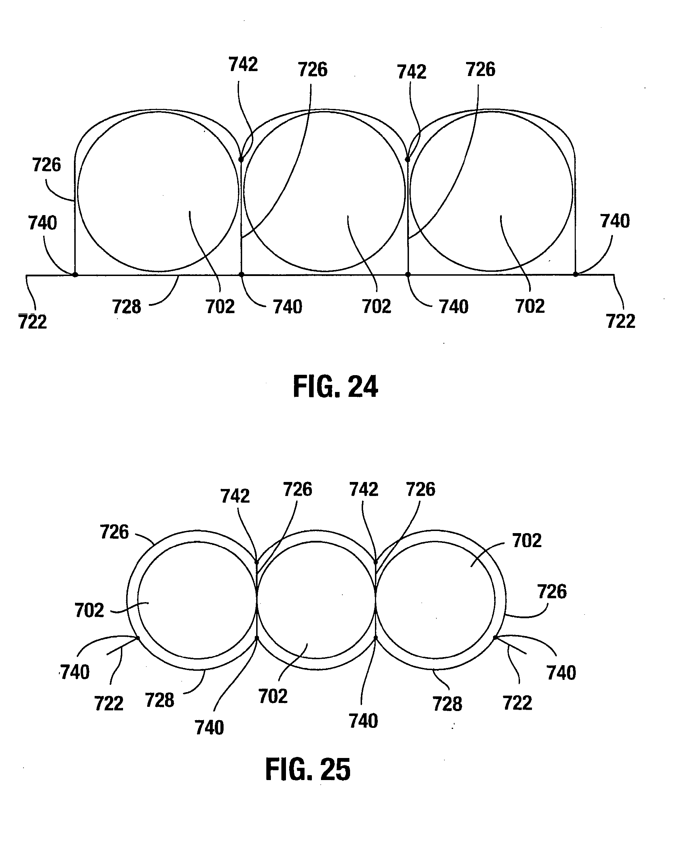

FIG. 24 shows a package 710 created by shrinkage of holder 700 around articles 702. FiG. 25 is a top view showing diagrammatically one possible relationship of sizes of holder 700 and articles 702 during shrinking, but before shrinking is completed so as to form package 710. It should be understood that during shrinkage films 726 and 728 will likely not shrink in such symmetrical fashion; FIG. 25 is therefore illustrative only of the concept of shrinkage of the films around the articles to form a package. Again, it should be kept in mind that tails 722 may be smaller than illustrated. In fact, it may be desirable from an aesthetic and handling scenario to minimize the size of tails 722. This could be achieved during manufacture of holder (by trimming or separating so as to create small tails) either before or after separation from a blank if employed, or after shrinkage as to so form a package.

As shown, graphical indicia 708 creates a unified image across package 710, but the graphical indicia may be designed to create a singular image for each article. Also, UPC 704 on one of the articles 702 is at least partially obscured by film 728. This arrangement can assist in inventory and at point of sale as a barcode reader would read UPC 706 (referring to package 710) when the package is being handled, but could read UPCs 704 (referring to articles 702) when the articles are being handled individually, for example if taken out of holder 700 and package 710. Alternatively, if perforations or other structures are employed to allow a portion of holder 700 to remain on article 702 after separation from package 710, then UPC 706 could refer to the article.

As mentioned above, various other options may be employed. For example, printing, additional labeling, etc. may be employed on more or more films. Additional separation points could be employed to create a wholly or partially separable label or sleeve for the articles. Adhesives, corona treatments or other elements could be used to help separate holder 700 from or secure holder 700 to articles 702 upon shrinkage, or to provide for selective welding only where desired. Additional sheets and rows of openings could be employed, and handles could be formed into the sheets depicted or attached to the package in various ways.

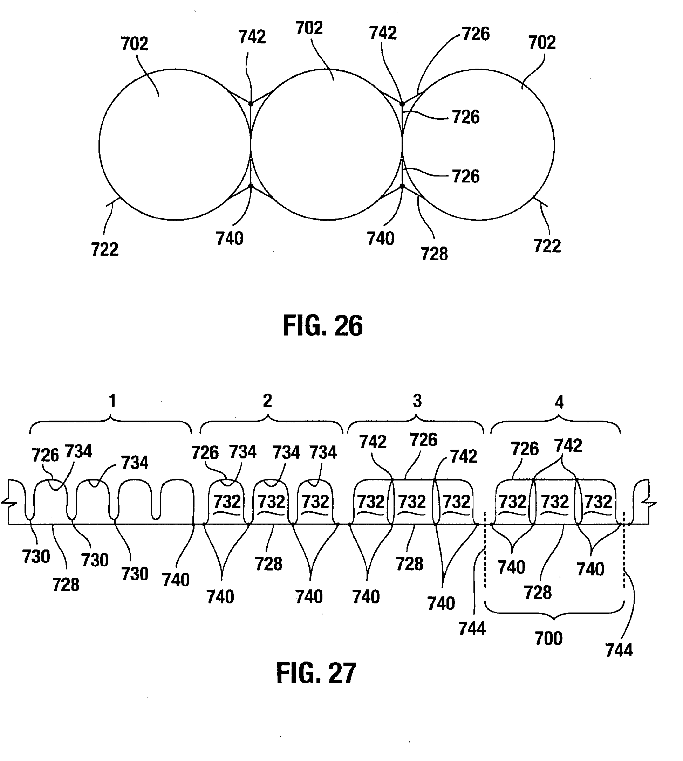

FIG. 27 shows diagrammatically possible methods for making holders such as 700. As shown in FIG. 27, films 726 and 728 move from left to right through representative stages 1 through 4. Film 728 may be maintained substantially linear, with film 726 being formed into a "corrugated" shape between valleys 730. Although multiple loops are shown formed by multiple valleys 730 simultaneously, such fully corrugated shape is not required. Instead, individual loops may be formed within stage 1.

Stage 2 is a first joinder stage. As shown, insides 734 of loops of film 726 face portions of film 728, forming openings 732 upon joinder at first joinder points 740. It should be understood that on or more joinder points 740 may be joined at a time, and one or more holders 700 may be formed at a time by joinder. Thus, the disclosure is not limited to any number of simultaneous joinings to create and number of holders. Further it should be understood that films 726 and 728 may extend in a direction "out of the page" as illustrated in FIG. 26, so that a wide blank is created, which could be separated at a later time into individual blanks and holders of a desired width matching the articles to be used.

Stage 3 is a second joinder stage in which adjacent loops of film 726 are joined to each other at second joinder points 742. In Stage 4 is separation points 744 are created, allowing individual holders to be separated either then or later as desired. As illustrated, separation points 744 are perforations that allow tearing of sheets 726 and 728 later. However, separation points 744 could be locations where a knife, laser, or other separator or cutter is employed to separate holders immediately. Separation at separation points 744 may create tails 722 or other such structures.

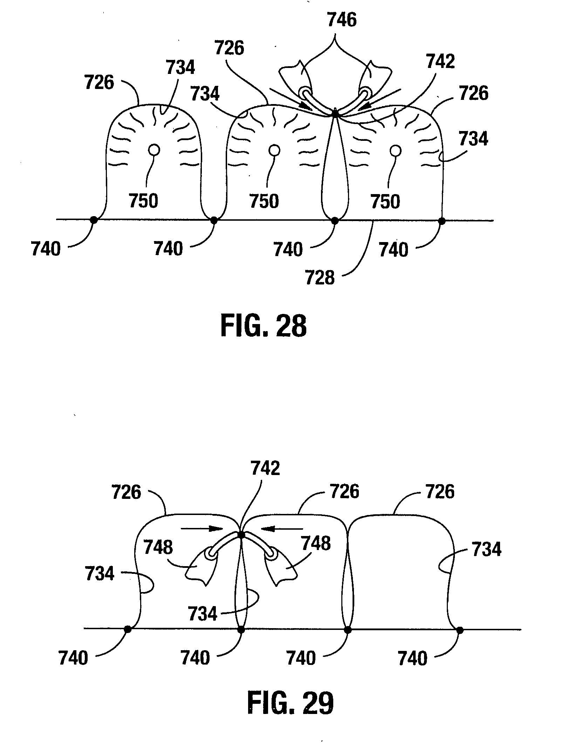

FIG. 28 shows one option for joining. As shown, joining elements 746 (diagrammatically depicted) may contact sheet 726 from the outside to form second joinder points 742. Joining elements 746 may comprise heat welders and/or devices for applying an adhesive. Additionally, corona discharge elements 750 may be employed during creation of holder 710 within openings 732, or as part of the manufacture of films 726 and/or 728. Corona treatment or other such treatment may render portions of the film substantially non-weldable, so that welding can occur substantially only where desired (i.e., at predetermined joinder points 740, 742). Also, use of pigments, inks, other layers or coatings, etc., may alter the weldability of the films at various points, and some sort of treatment may be required to achieve weldability or non-weldability to fit a particular application.

FIG. 29 shows an alternative joinder arrangement where joining elements 748 are placed within openings 732. Either the inside or outside method or a hybrid of both may be used depending on the application. It should be understood that other joinder methods such as ultrasonics, releasable or non-releasable adhesive application, etc., may be employed as well or instead following similar principles at joinder points 740 or 742. If desired additional separation points, perforations, etc. may be created such as shown in FIGS. 4A and/or 10-13 for separability, sleeving, etc.

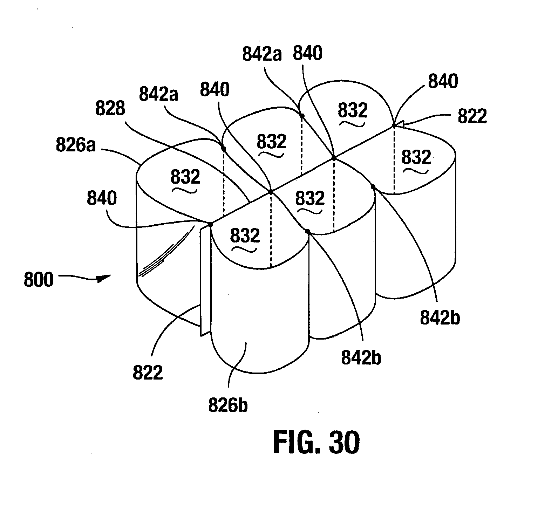

FIG. 30 shows a modified version of the holder of FIGS. 21-29, except that holder 800 is formed of three sheets, so as to create a two-rowed holder and package. Sheets 826a and 826b are thus attached to central sheet 828 as described above with reference to holder 700. Six openings 832 are formed with joinder points 840, 842a, 842b. Tails 822 could include all three sheets. The formation and use of holder 800 is generally similar to that of holder 700 as described above, except that one additional sheet is added. Other variations are possible in terms of the number of sheets, rows, etc., as desired for a particular application.

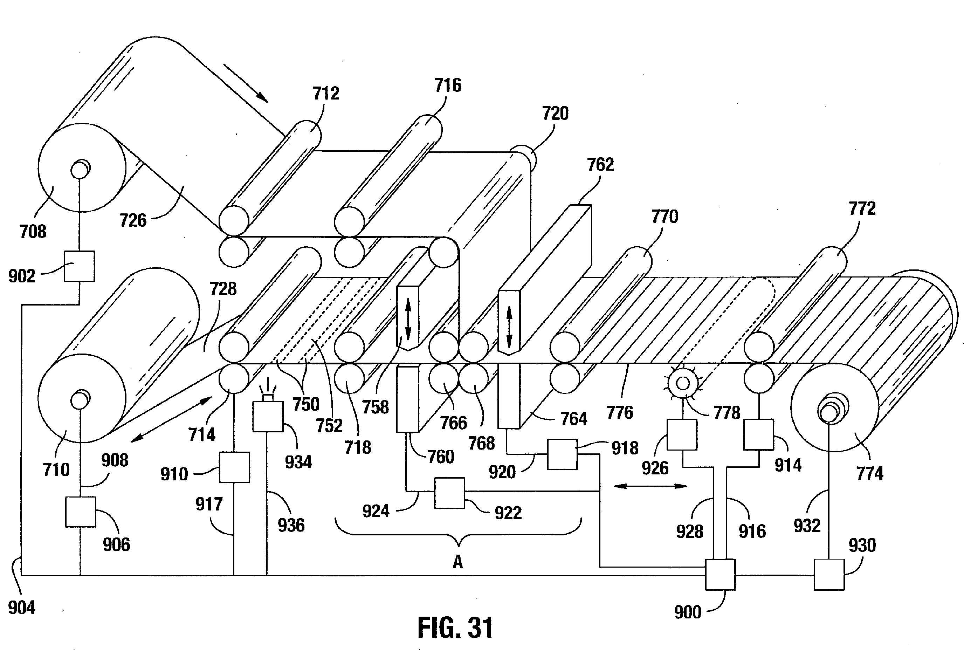

FIGS. 31-37 show one possible process and structure for manufacturing a holder such as holder 702 of FIG. 21. It should be understood that the steps and configurations of FIGS. 31-37 are subject to variation, depending on the materials used, the articles used, the shape and number of the articles, the use of graphical indicia or color, and other factors. Therefore, the subject matter of FIGS. 31-37 should be considered just one example for making one type of holder. However, the present inventions should not be limited by the disclosure of FIGS. 31-37.

As shown in FIG. 31 , films 726 and 728 are fed respectively from rolls 708 and 709 through a joinder area A to a takeup roll, box, or equivalent 774. Guide rollers such as 712, 714, 716, 718, and 720 may be provided in various orientations to feed films 728 and 728 to area A as desired. Similarly downstream rollers 770, 772 are provided to feed joined films 776 (comprising a holder blank) from area A to takeup 774. A separation device 778, such as a rotary or linearly actuating perforating knife or roller may also be provided upstream or downstream of area A. The individual rollers may be driven or undriven, pinch rollers or single rollers, or may be configured as pivotable flight bars to maintain tension, etc., as desired. Therefore, it should be understood that guide rollers 712-720, 770 and 772 as shown are diagrammatical only.

A first joinder device 758, 760 and a second joinder device 762, 764 are provided within joinder area A. As shown, portions 758 and 762 are movable welding heads, although other structures could be employed or the movable or heated portions could be reversed. Rollers 766 and 768 may also be provided (driven or undriven, pinch or single, etc.) within area A to help control films 726 and 728 within area A.

A control system for the various parts is diagrammatically shown in FIG. 31. As shown, one or more controllers 900, which may be a programmable logic controller such as that available from Allen-Bradley or others, is provided. Controller 900 is connected to drives 902, 906, and 930 and respective rollers and other elements via connections 904, 908, and 932 respectively. The drives may comprise individual electric motors. Also roller drives 910 and 914 may be connected via connections 912, 916. It should be understood that all of the depicted rollers may have drives and that only a few are shown for clarity. These drives may comprise smaller motors, pneumatic systems, hydraulic systems, servo motors, frictional brakes, clutches, combinations, etc. Gearing, chain drives or other power control and distribution systems may also be used with all drives.

Drives 918 and 922 are provided for the joinder devices as well, connected via connections 920 and 924. Similarly, drive 926 for device 778 is connected by connection 928. These drives may move any or all of parts 758-764 and 778, and may comprise servo motors, pneumatic or hydraulic systems, combinations, etc.

One or more sensing devices 934 may be provided at various places within the system of FIG. 31 to provide feedback and control information to controller 900. As shown, only one such device is shown sensing alternating features 750 and 752 on film 728. Such features could comprise weldable or non weldable portions, or registration marks, etc. It should be understood that multiple sensors may be employed along either film 726 or 728, blank 776, rollers 708 or 710, takeup 774, or on any other rollers or portions of the system. Therefore the location of sensor 934 is by way of example only and should not be considered limiting. Sensing device 934 could be an optical sensor, a temperature sensor, a rotary sensor, etc., as would be useful for the control of the system and its various components via controller 900.

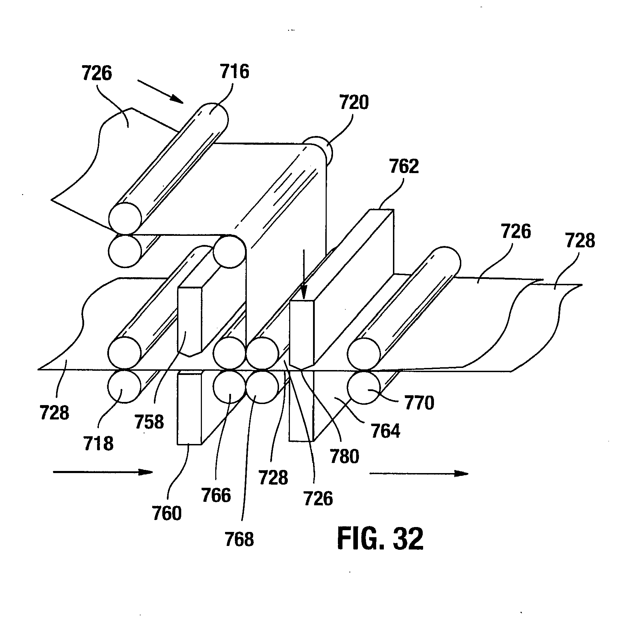

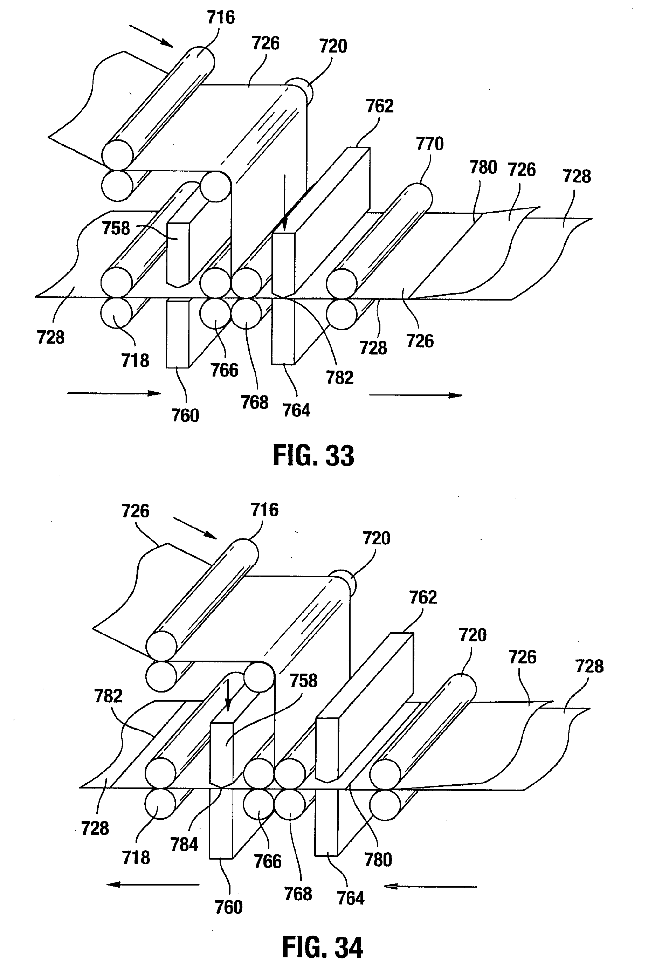

FIGS. 32-37 show operation of the system, in particular area A. First, in FIG. 32, films 726 and 728 have been fed into the system from rollers 708 and 710 in the direction of the three arrows to begin the process. Elements 762 and 764 have been brought together to create a joinder 780 between films 726 and 728. Elements 762 and 764 are them moved apart. As shown in FIG. 33, films 726 and 728 are moved further in the direction of the arrows, and then elements 762 and 764 are brought together to create another joinder 782 between films 726 and 728. Joinders 780 and 782 correspond to two first joinder points 740 in a holder such as shown in FIG. 21.

At this point, elements 762 and 764 are again separated. Film 728 and downstream joined portions of films 726 and 728 are driven the opposite direction as before, but upstream portion of film 726 is again driven forward, as indicated by the arrows in FIG. 34. Elements 758 and 760 then close, forming joinder 784. Note that this joinder is between two folded portions of film 726, thereby corresponding to a second joinder point 742 of FIG. 21.

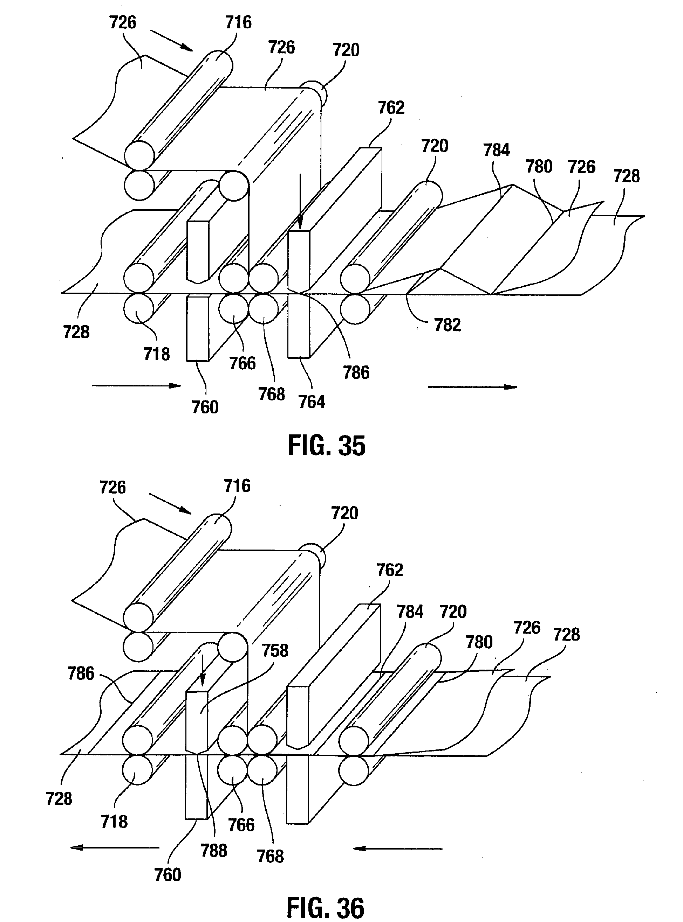

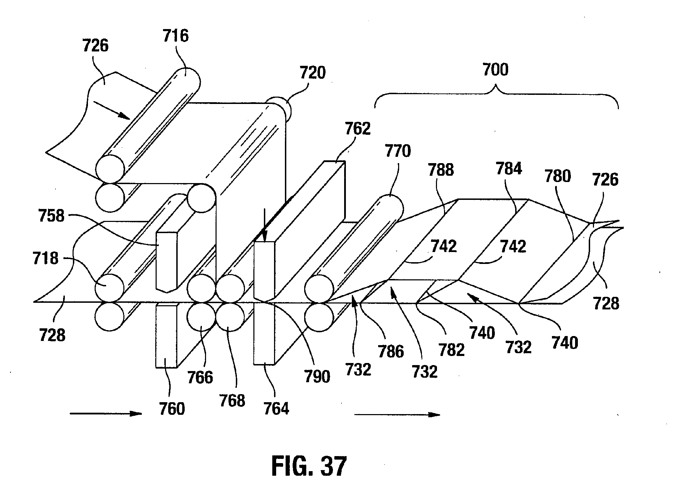

Elements 758 and 760 are then separated and the films are all driven forward again, as shown by the arrows in FIG. 35. Elements 762 and 764 are then brought together to create another joinder 786 between films 726 and 728, corresponding to a joinder point 740. The reversing process is the repeated two more times in FIGS. 36 and 37 to created joinders 788 and 790. At this point, as can be seen (in an exaggerated vertical fashion for clarity) in FIG. 37, a holder 700 portion of blank 776 is created having first and second joinder points 740 and 742. Separating device 778 can be employed to provide perforations or the like to separate holder 700 from the next holder within blank 778.

If elements 750 and 752 are weldable and non-weldable portions, graphical matter, etc. respectively, then the system can be controlled as described above so that joinder occurs at desired locations, and LJPC codes, logos or other graphical matter is positioned as desired along holder 700. For example, if corona treatment has been applied to the films to render portions unweldable, printable, etc., then sensors, drives, controllers, etc., can ensure that joining such as welding or adhering occurs where desired along films 726 and 728. Alternatively, treatments used to make films weldable or adherable could also be employed, with the system controlling the films and processes accordingly. As stated above such treatments could occur during film manufacture or on line while the holder is created from films.

The blanks 778 of such process could be attached to articles to create packages in the various ways described above, although other methods could be used. Also, blanks 778 and structure and steps used to create them could be modified in various ways to meet a given application, article shape, package orientation.

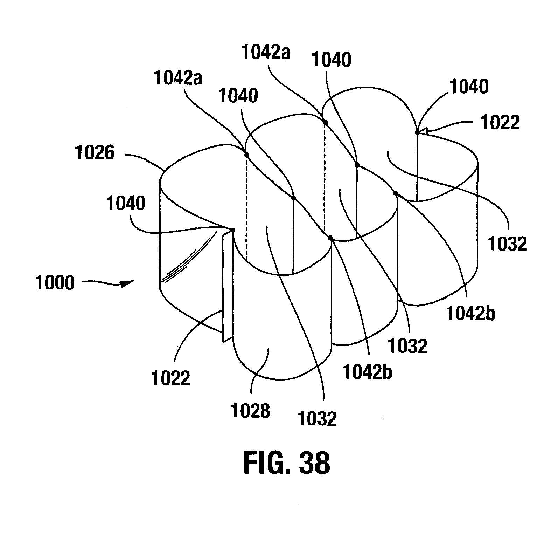

FIGS. 38-40 show alternate holder, package, method and systems concepts. As shown in these figures, films may be folded one or more times to create multiple sheets used to create holders. Also, more than two joinder points (in this case welds) may be present between openings for adjacent articles in a holder. It should be understood that features from FIGS. 38-40 may be applied to previous examples and disclosures, and vice versa.

More particularly, holder 1000 shown in FIG. 38 includes two sheets 1026 and 1028. Sheets 1026 and 1028 are joined at a plurality of first joinder points 1040 to form at least one (three are shown) opening 1032. Second joinder points 1042a are formed between adjacent loops of film 1026 and second joinder points 1042b are formed between adjacent loops of film 1028. Tails 1022 may be formed, as mentioned above. Also, various options mentioned above such as perforations may be included where desired, as well as printed indicia, color, bar codes, handles, etc.

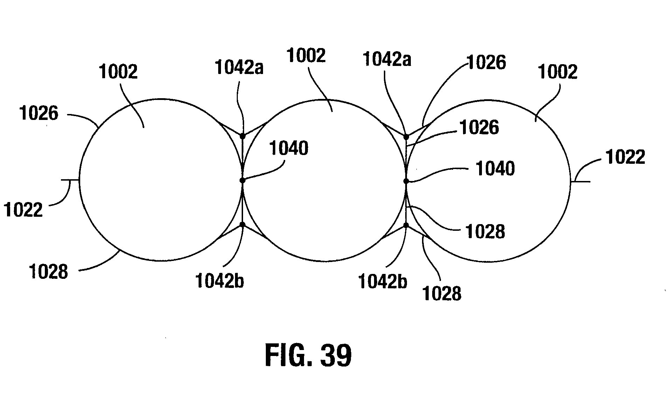

FIG. 39 shows a package made from a shrunken holder 1000 and three containers 1002. As shown, such construction provides for multiple joinder points between adjacent articles and film between adjacent articles to prevent damage. Also, an outer surface of the package visible to the consumer is more continuous than in previous embodiments, as second joinder points 1042a and 1042b pull film outward from the circumference of the articles 1002 a bit, perhaps providing an easier to read or more pleasing appearance.

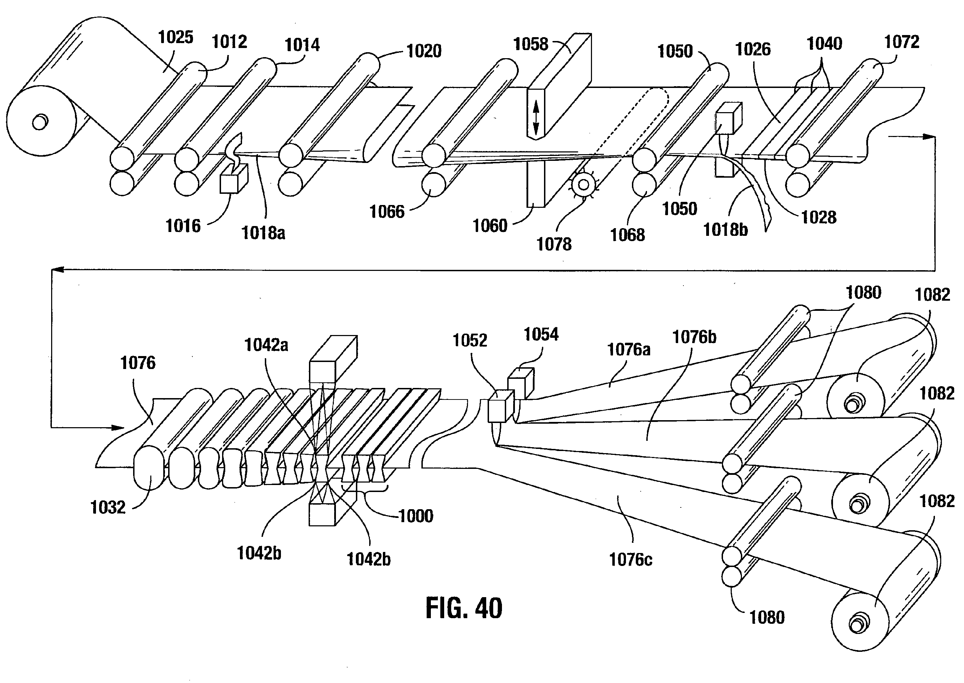

FIG. 40 shows one possible system for manufacturing such a holder 1000 starting with a single film 1025. As shown, film 1025 passes through feed rollers such as 1012, 1014 or the like before reaching a folding device 1016, schematically shown. At folding device 1016, film 1025 is folded in half, thereby becoming half as wide, although shown as continuing in full width for clarity of illustration of the following steps. Further rollers 1020, 1066, etc. may feed film 1025 along. A break is shown between these two rollers to show that film 1025 is folded at this point.

Further downstream, elements 1058 and 1060, which can be heat sealing elements or other joinder elements as mentioned above, join the two folds of film 1025 at first joinder points 1040 forming openings 1032 in between. A device for perforating film 1025 may be provided as shown at element 1078. Further rollers such as 1050 and 1072 may then draw film 1025 to a cutting element 1050 such as a knife, laser, etc, for removing the fold portion 1028. At this point, film 1025 may be considered to be a predecessor sheet split into two film sheets 1026 and 1028. Therefore, if desired, for this embodiment and any other above requiring more than one sheet of film, a fold and cut method and apparatus may be employed to achieve the holder. Such a method and apparatus can provide certain benefits, such as not having to feed and synchronize multiple film rolls with complex machinery and programming, being able to print all of a desired product holder on a single roll, rather than multiple rolls saving inventory and logistic problems, etc. The line can also have a smaller footprint.

Further down the line, second joinder points 1042a and 1042b are created as desired by devices such as those described above. After such point, a blank 1076 comprising a plurality of holders 1000 is formed. Such blank 1076 may be fed to a take up roll 1082, box, further machinery, etc. Alternately, further splitting may be employed. As shown, two cutting elements 1052 and 1054 are provided for slicing blank 1076. Fig. 40 illustrates cutting into three blank portions 1076a, 1076b, and 1076c, with feed rollers 1080 pulling each blank onto respective rollers 1082. As above, certain efficiencies can be achieved by forming blank 1076 initially of a width larger than a single blank needed for a single group of articles. Separating blank 1076 into two or more sub-blanks (three are shown) can therefore achieve more cost and space savings. This concept can be applied to the methods and apparatus for manufacturing various holders above.

Therefore, it should be understood that the types of holders, packages, articles, devices and methods utilized with the teachings of the present disclosure should not be limited to those embodiments shown herein. It should also be understood that features of the various embodiments above may be recombined in other ways to achieve still further embodiments within the scope of the present invention, as set out in the appended claims.

## Claims

1. A heat-shrinkable holder (500) for securing a plurality of articles (502), the holder comprising:
at least a first and second blank strips (524/526, 528/530), each first and second blank strip including:
a first sheet (524,530) formed of heat-shrinkable material and having a pre-shrinking length; and
a second sheet (526,528) formed of heat-shrinkable material having a pre-shrinking length substantially equal to the first sheet pre-shrinking length, the second sheet being joined to the first sheet at discrete joinder locations (540) so as to create at least two openings (532) therebetween, each of the openings sized larger than one of the articles, the first and second sheets including perforations (544) at the discrete joinder locations; and
fastener portions (542) for holding the first blank strip to the second blank strip, the fastener portions being located between a second sheet (526) of a first strip and a second sheet (528) of a second strip at locations spaced from the perforations (544), each of the first and second sheets being heat-shrinkable to an extent to secure one of the articles in each opening, **characterized in that**:
the fastener portions comprise releaseable fastener portions, and a portion of one of the first sheets and a portion of one of the second sheets securing one of the articles is removable from the holder by tearing at the perforations (544) and by release of the releasable fastener portion (542).

2. The holder of claim 1, wherein the first (524/530) and second sheets (526/528) are joined via at least one of heating or an adhesive.

3. The holder of one of claims 1 or 2, wherein the perforations (546a) and releasable fastener portions (542a) are located so that upon removal of the portion of the first sheet (530a), the portion of the second sheet (528a) and the article (502a), the holder (500) and remaining articles (502b-f) are an intact package (510) and no waste holder material is generated.

4. The holder of one of claims 1-3, wherein the holder (500) is configured with six openings (532) for securing six articles (502) in a two-by-three arrangement.

5. The holder of one of claims 1-4, wherein at least one of the first or second sheets includes printed indicia (0562) relating to the article.

6. The holder of one of claims 1-5, wherein the portion of the first sheet and the portion of the second sheet comprise a label (0562) for the article.

7. A package comprising a plurality of articles secured by a holder according to any of claims 1-6.

8. The package of claim 7, wherein the perforations (546a) and releasable fastener portions (542a) are located so that upon removal of the portion of the first sheet (530a), the portion of the second sheet (528a) and the article (502a), the package (510) of remaining articles (502b-f) is intact and no waste holder material is generated.

9. The package of one of claims 7 or 8, wherein the articles do not contact each other directly when secured.

10. A holder of one of claims 1-6, wherein the four sheets (524/526/528/530) of heat-shrunken material have substantially equal pre-shrinking lengths, the sheets being joined to form the openings (532) arranged in at least two rows, individual articles being separable from the package without generating waste holder material.

11. The holder of claim 10, wherein the perforations (546a) and releasable fastener portions (542a) are located so that upon separation of an article (502a) from the package (510) the holder (500) and remaining articles (502b-f) are intact and no waste holder material is generated.

12. The holder of one of claims 10-11, wherein at least one of the sheets includes printed indicia (562) relating to the article.

13. The holder of one of claims 10-12, wherein the portion of the sheets separated with the article comprise a label (562) for the article.

14. A package comprising a plurality of articles secured by a holder according to any of claims 10-13.

## Patentansprüche

1. Wärmeschrumpfbarer Halter (500) zum Sichern mehrerer Artikel (502), wobei der Halter Folgendes umfasst:
mindestens einen ersten und zweiten leeren Streifen (524/526, 528/530), wobei der erste und der zweite Streifen jeweils Folgendes aufweisen:
eine erste Bahn (524, 530), die aus wärmeschrumpfbarem Material gebildet ist und eine Vorschrumpflänge aufweist; und
eine zweite Bahn (526, 528) aus wärmeschrumpfbarem Material, die eine Vorschrumpflänge aufweist, die im Wesentlichen der Vorschrumpflänge der ersten Bahn entspricht, wobei die zweite Bahn an diskreten Verbindungsstellen (540) mit der ersten Bahn verbunden ist, um mindestens zwei Öffnungen (532) dazwischen zu schaffen, die jeweils größer sind als einer der Artikel, wobei die erste und die zweite Bahn Perforationen (544) an den diskreten Verbindungsstellen aufweisen; und
Befestigungsabschnitte (542) zum Halten des ersten leeren Streifens an dem zweiten leeren Streifen, wobei die Befestigungsabschnitte zwischen einer zweiten Bahn (526) eines ersten Streifens und einer zweiten Bahn (528) eines zweiten Streifens an Stellen angeordnet sind, die von den Perforationen (544) beabstandet sind, wobei die erste und die zweite Bahn in einem Maße wärmeschrumpfbar sind, um einen der Artikel in jeder Öffnung zu sichern, **dadurch gekennzeichnet, dass**
die Befestigungsabschnitte lösbare Befestigungsabschnitte umfassen und ein Abschnitt einer der ersten Bahnen und ein Abschnitt einer der zweiten Bahnen, die einen der Artikel sichern, von dem Halter durch Ziehen an den Perforationen (544) und durch Freigeben des lösbaren Befestigungsabschnitts (542) entfernt werden können.

2. Halter nach Anspruch 1, wobei die ersten (524/530) und die zweiten Bahnen (526/528) durch mindestens eines von Erwärmen oder einen Klebstoff verbunden sind.

3. Halter nach einem der Ansprüche 1 oder 2, wobei die Perforationen (546a) und die lösbaren Befestigungsabschnitte (542a) derart angeordnet sind, dass, bei Entfernen des Abschnitts der ersten Bahn (530a) der Abschnitt der zweiten Bahn (528a) und der Artikel (502a), der Halter (500) und die restlichen Artikel (502b bis f) eine intakte Verpackung (510) bilden und kein Abfallhaltermaterial erzeugt wird.

4. Halter nach einem der Ansprüche 1 bis 3, wobei der Halter (500) mit sechs Öffnungen (532) zum Sichern von sechs Artikeln (502) in einer Zweier-Dreier-Anordnung konfiguriert ist.

5. Halter nach einem der Ansprüche 1 bis 4, wobei mindestens eine der ersten oder zweiten Bahnen gedruckte Zeichen (0562) aufweist, die den Artikel betreffen.

6. Halter nach einem der Ansprüche 1 bis 5, wobei der Abschnitt der ersten Bahn und der Abschnitt der zweiten Bahn ein Etikett (0562) für den Artikel umfassen.

7. Verpackung, die mehrere Artikel umfasst, die von einem Halter nach einem der Ansprüche 1 bis 6 gesichert sind.

8. Verpackung nach Anspruch 7, wobei die Perforationen (546a) und die lösbaren Befestigungsabschnitte (542a) derart angeordnet sind, dass bei Entfernen des Abschnitts der ersten Bahn (530a) der Abschnitt der zweiten Bahn (528a) und des Artikels (502a), die Verpackung (510) der restlichen Artikel (502b bis f) intakt ist und kein Abfallhaltermaterial erzeugt wird.

9. Verpackung nach einem der Ansprüche 7 oder 8, wobei die Artikel beim Sichern nicht direkt in Kontakt miteinander stehen.

10. Halter nach einem der Ansprüche 1 bis 6, wobei die vier Bahnen (524/526/528/530) aus wärmegeschrumpftem Material im Wesentlichen gleiche Vorschrumpflängen aufweisen, wobei die Bahnen zum Bilden der Öffnungen (532) verbunden werden, die mindestens in zwei Reihen angeordnet sind, wobei die einzelnen Artikel von der Verpackung trennbar sind, ohne Abfallhaltermaterial zu erzeugen.

11. Halter nach Anspruch 10, wobei die Perforationen (546a) und die lösbaren Befestigungsabschnitte (542a) derart angeordnet sind, dass bei Trennen eines Artikels (502a) von der Verpackung (510), der Halter (500) und die restlichen Artikel (502b bis f) intakt sind und kein Abfallhaltermaterial erzeugt wird.

12. Halter nach einem der Ansprüche 10 bis 11, wobei mindestens eine der Bahnen gedruckte Zeichen (562) aufweist, die den Artikel betreffen.

13. Halter nach einem der Ansprüche 10 bis 12, wobei der Abschnitt der Bahnen, der mit dem Artikel abgetrennt wird, ein Etikett (562) für den Artikel umfasst.

14. Verpackung, die mehrere Artikel umfasst, die von einem Halter nach einem der Ansprüche 10 bis 13 gesichert sind.

## Revendications

1. Manchon thermorétractable (500) pour solidariser une pluralité d'articles (502), le manchon comprenant:
au moins une première et une deuxième bandes d'ébauche (524/526, 528/530), chacune des première et deuxième bandes d'ébauche comprenant:
une première feuille (524, 530) constituée d'un matériau thermorétractable et présentant une longueur de thermorétraction; et
une deuxième feuille (526, 528) constituée d'un matériau thermorétractable et présentant une longueur de thermorétraction sensiblement égale à la longueur de thermorétraction de la première feuille, la deuxième feuille étant jointe à la première feuille à des points de jonction discrets (540) de manière à créer au moins deux ouvertures (532) entre celles-ci, chacune des ouvertures ayant une taille plus grande que celle de l'un des articles, les première et deuxième feuilles comportant des perforations (544) aux points de jonction discrets; et
des parties de fixation (542) afin de solidariser la première bande d'ébauche à la deuxième bande d'ébauche, les parties de fixation étant situées entre une deuxième feuille (526) d'une première bande et une deuxième feuille (528) d'une deuxième bande en des endroits espacés des perforations (544), chacune des première et deuxième feuilles étant thermorétractable dans une mesure permettant la fixation de l'un des articles dans chaque ouverture, **caractérisé en ce que**:
les parties de fixation comprennent des parties de fixation détachables, et une partie de l'une des premières feuilles et une partie de l'une des deuxièmes feuilles solidarisant l'un des articles peut être détachée du manchon en la déchirant au niveau des perforations (544) et par le détachement de la partie de fixation détachable (542).

2. Manchon selon la revendication 1, dans lequel les premières (524/530) et deuxièmes (526/528) feuilles sont jointes par l'intermédiaire d'au moins soit un chauffage, soit un adhésif.

3. Manchon selon la revendication 1 ou 2, dans lequel les perforations (546a) et les parties de fixation détachables (542a) sont situées de telle sorte que lors de l'enlèvement de la partie de la première feuille (530a), de la partie de la deuxième feuille (528a) et de l'article (502a), le manchon (500) et les articles restants (502b-f) se trouvent dans un emballage intact (510) et qu'aucune matière de déchet de manchon ne soit générée.

4. Manchon selon l'une quelconque des revendications 1 à 3, dans lequel le manchon (500) est configuré avec six ouvertures (532) pour solidariser six articles (502) dans un agencement deux par trois.

5. Manchon selon l'une quelconque des revendications 1 à 4, dans lequel au moins une des première ou deuxième feuille comporte des indications imprimées (0562) relatives à l'article.

6. Manchon selon l'une quelconque des revendications 1 à 5, dans lequel la partie de la première feuille et la partie de la deuxième feuille comprennent une étiquette (0562) pour l'article.

7. Emballage contenant une pluralité d'articles solidarisés par un manchon selon l'une quelconque des revendications 1 à 6.

8. Emballage selon la revendication 7, dans lequel les perforations (546a) et les parties de fixation détachables (542a) sont situées de telle sorte que lors de l'enlèvement de la partie de la première feuille (530a), de la partie de la deuxième feuille (528a) et de l'article (502a), l'emballage (510) des articles restants (502b-f) soit intact et qu'aucune matière de déchet de manchon ne soit générée.

9. Emballage selon la revendication 7 ou 8, dans lequel les articles ne sont pas directement en contact les uns avec les autres lorsqu'ils sont solidarisés.

10. Manchon selon l'une quelconque des revendications 1 à 6, dans lequel les quatre feuilles (524/526/528/530) de matériau thermorétracté présentent des longueurs de thermorétraction sensiblement égales, les feuilles étant jointes de manière à former les ouvertures (532) agencées en au moins deux rangées, des articles individuels pouvant être détachés de l'emballage sans générer de matière de déchet de manchon.

11. Manchon selon la revendication 10, dans lequel les perforations (546a) et les parties de fixation détachables (542a) sont situées de telle sorte que lors de la séparation d'un article (502a) de l'emballage (510), le manchon (500) et les articles restants (502b-f) soient intacts, et qu'aucune matière de déchet de manchon ne soit générée.

12. Manchon selon la revendication 10 ou 11, dans lequel au moins une des feuilles comporte des indications imprimées (562) relatives à l'article.

13. Manchon selon l'une quelconque des revendications 10 à 12, dans lequel la partie des feuilles séparée avec l'article comprend une étiquette (562) pour l'article.

14. Emballage contenant une pluralité d'articles solidarisés par un manchon selon l'une quelconque des revendications 10 à 13.
